# EUROPEAN PATENT APPLICATION

(11) **EP 3 699 845 A1**
(43) Date of publication of application: **26.08.2020**
(21) Application number: 18867871.8
(22) Date of filing: 15.10.2018
(51) Int. Cl.: G06Q 10/10

(54) **INCENTIVE PROCESSING DEVICE, INCENTIVE PROCESSING METHOD, INCENTIVE PROCESSING SYSTEM, AND COMPUTER PROGRAM THEREFOR**

(30) Priority: 17.10.2017 JP 2017200720; 30.07.2018 JP 2018142106
(71) Applicant: Doreming LLC, Tokyo 102-0071 (JP)
(72) Inventor: Takasaki, Yoshikazu, Tokyo 102-0071 (JP)
(74) Representative: Burton, Nick
(86) International application number: PCT/JP2018/038257
(87) International publication number: WO 2019/078139

(57) **Abstract**

Provided is a technique that makes it possible to perform a process of making payment with an incentive provided to a worker by a company when the worker makes consumption designated by the company. An incentive processing device 1 of the present invention obtains worker IDs and pieces of incentive information indicating the values of incentives provided to workers from a personnel attendance salary calculation device 3, and registers the pieces of incentive information in association with the respective worker IDs in an incentive balance information DB 24. Then, the incentive processing device 1 obtains consumption information containing worker information, to-be-consumed money information, and a consumption destination ID from a payment terminal 2 and determines whether a consumption destination identified based on the consumption destination ID satisfies a consumption condition designated by a company. If determining that the consumption condition is satisfied, the incentive processing device 1 subtracts the to-be-consumed money information from the corresponding incentive information registered in the incentive balance information DB to thereby calculate the balance, and registers this balance in association with the worker ID in the incentive balance information DB.

## Description

### Technical Field

The invention of the present application relates to a technique in which a company, which is an employer, provides its workers with incentives aimed at promoting consumption, revitalizing communities, and supporting business partners, in order to increase the real wages of the workers and, at the same time, to increase sales in the country, communities, business partners, and so on and thereby support revitalization of the economy through consumption by these incentives.

### Background Art

In many developed countries, populations have been concentrated in urban areas whereas suburbs and rural areas have been more and more depopulated due to population outflows, and there has been a demand to strengthen the financial base. Currently, the national and local government agencies and the like have been actively attracting companies and providing subsidies and loans to companies for regional revitalization.

Also, in developing countries, funds from developed countries have been used to actively attract companies, invest in entrepreneurship, and provide loans in order to create jobs.

The reality, however, is that it is not clear whether these subsidies and loans are being used correctly. For example, there have been many cases where malicious business owners and entrepreneurs embezzle subsidies and loan money, use them for bribes, or spend them for something irrelevant to their business. This has left philanthropists and support groups using part of national finances in a head-scratching situation.

On the other hand, some companies have been actively trying to provide economic support to their local regions where the companies are located and their business partner companies. That is, companies, regardless of their scale, have a close and indivisible relationship with their local communities, and a better local community will lead to a better business environment for the company. Hence, efforts to contribute to local communities have become important. In addition, it has become important for companies to continue mutual development by building relationships of co-existence and co-prosperity with their business partners, as well as taking root in their local communities.

Thus, companies encourage their workers to consume (shop) in their local communities and at their business partners, but workers will not get motivated to consume in their local communities and at their business partners if they do not feel the benefit to do so. Also, companies do not have means to figure out how much money they are paying to their local communities and business partners. If this amount of money paid can be figured out, the companies can show the specific amount of money to their local communities and business partners to show how much the companies have contributed. The reality, however, is that the companies do not have means to do this and therefore have a problem of being not easily appreciated.

In addition, many workers wish to contribute not only to the companies they work for but also to their business partners and local communities. The reality, however, is that even if workers purchase and consume products and services of the companies they work for, their business partners, or their local communities, the workers do not have means to prove information on their contribution and therefore have a problem of being not easily appreciated.

Meanwhile, in recent years, salary calculation systems have been known which calculates the salaries of workers in real time by using an attendance management system that obtains information on the attendance of the workers and the like through the Internet (see Patent Literature 1, for example). In such a salary calculation system, the compensation for labor provided by each worker is calculated based on the attendance information on the worker obtained by the attendance management system, and the amount of money to be provided is calculated by deducting the public amounts collected such as taxes and insurance annuity and adding the overtime allowance, commuting allowance, dependency allowance, and the like and provided to the worker.

Also, payment processing methods have been known which involve performing daily salary calculation in real time and enabling a worker to shop before the scheduled date of provision of the salary (e.g., to use the salary for consumption) based on the take-home amount (i.e., labor credit), which is the calculated compensation for labor provided by the worker (see Patent Literature 2, for example). Specifically, these payment processing methods have been created for low-income workers to avoid borrowing money with high interest rates by enabling the workers to shop at any time up to the amounts of salaries to be provided and pay the consumed amounts of money later on their paydays and enabling their companies or financial institutions to make advance payment.

Such a payment processing method is also effective for consumption by workers who do not have accounts in financial institutions. Specifically, according to the World Bank's 2014 Financial Inclusion Database (Global Findex) report, there are 2 billion adults who do not have an account with a financial institution, such as a bank. It is therefore said that, without providing financial services to these people, it is impossible to reduce poverty and disparities and realize a vision of creating a world achieving the Sustainable Development Goals (SDGs) proposed by the United Nations.

A problem is therefore the payment of salaries to workers with no bank account. Currently, workers with no bank account are paid in cash. Among developing countries, there have been a rapid increase in the number of countries that are reducing cash, which has been a hotbed for counterfeit notes, bribes, tax evasion, and theft, and switching to digital money (electronic money). For this reason, there is a rapid increase in the need for means that enables payment to be made directly by a salary provided in digital money, as in the above payment processing method, unlike conventional payment means that uses provided cash to make purchases.

Further, combining provision of salary and a payment service in digital money based on a blockchain technology has been considered. In this way, it is possible to figure out which financial institutions in which countries issued salaries provided, how much money was prepared by which companies, when, and from where, and how much money companies have in their electronic wallets. At the same time, it is also possible to figure out how much salary has been provided to which worker and how much income tax has been paid to the country in real time, and also figure out how much money each worker currently has in the worker's electronic wallet and where the worker made consumption. Therefore, it is believed that blockchain-based digital money makes bribery, tax evasion, money laundering, and so on difficult, helping to prevent crimes, and also makes it easier for earnest workers to receive financial services and thus create the foundation of a fair society.

### Citation List

### Patent Literatures

Patent Literature 1: Japanese Patent Application Publication No. 2001-273389
Patent Literature 2: Japanese Patent Application Publication No. 2016-177803

### Summary of Invention

### Technical Problem

However, as far as the present applicant knows, a system has not been proposed which, based on a conventionally known salary calculation system as disclosed in Patent Literature 1 and the payment processing method disclosed in Patent Literature 2, increases the value of a company and its workers by contributing to the sales of particular regions, business partners, stores, and so on through consumption by the workers with incentives provided to be utilized for limited purposes such as regional contribution and business partner support.

Also, by combining provision of an allowance to be utilized for limited purposes with a service of providing salary in digital money, it is considered possible to propose a system that leads to construction of a fair and orderly society capable of preventing fraudulent acts such as bribery, tax evasion, money laundering, and theft.

The present invention has been made in view of the above circumstances, and an object thereof is to provide a technique for providing a purpose-specific incentive (e.g., allowance) designated by a company being an employer to its workers and enabling the workers to make payment using the incentive for consumption for that purpose.

Moreover, a further object of the present invention is to provide an economic revitalization support technique capable of, by means of the above consumption activity, preventing fraudulent acts with subsidies and subventions aimed at regional revitalization and the like and helping all involved individuals and parties appreciate each other.

### Solution to Problem

In view of the above, the present inventor has conceived of a system in which a company employs an incentive (allowance) intended to encourage its workers to consume in particular regions and at particular business partners, by using an attendance management-salary calculation system capable of providing an allowance as an incentive. In this system, the available local stores and business partners, the available period, and the available products and services are determined on a worker-by-worker basis. Also, the attendance management-salary calculation system that provides the incentive receives worker identification information with which consumption was made, the location (region), store name, and store identification information of the store where the consumption was made, and consumed money information transmitted by an incentive processing device of the present invention. In this way, the company can pay all or part of the consumed amount of money as an allowance for the purpose of providing an employee benefit.

In other words, the present invention provides a system that, when a worker consumes at a store in a particular region or at a particular business partner, enables the company to provide all or part of the consumed amount of money to the worker as an incentive, which the company refers to as a consumption allowance, as an employee benefit, so as to continuously contribute to the economic activity of the store in the particular region or the particular business partner and thereby increase the value of the company.

An incentive processing device according to the present invention is an device for performing a process of making payment by using an incentive provided to a worker by a company when the worker makes consumption designated by the company, and is configured to be capable of communicating through a network with a payment terminal to be used by a worker to make payment for consumption and a personnel attendance salary calculation device that calculates salary of the worker based on attendance and leaving times of the worker and personnel labor information on the worker. The incentive processing device comprises company specification information storage means for storing, in association with each other, worker identification information identifying the worker and company identification information identifying the company that provides an incentive to the worker. The incentive processing device comprises consumption condition information storage means for storing, in association with each other, the company identification information and a consumption condition designated by the company for making payment with the incentive. The incentive processing device comprises consumption destination information storage means for storing, in association with each other, consumption destination identification information identifying a consumption destination and consumption destination related information including a name and address of the consumption destination. The incentive processing device comprises incentive balance information storage means for storing, in association with each other, the worker identification information and a balance of the incentive information provided to the worker by the company. The incentive processing device comprises incentive information registration means for obtaining, from the personnel attendance salary calculation device, incentive provision information containing at least the pieces of worker identification information identifying workers and the pieces of incentive information indicating values of the incentives provided to the workers, and registering the pieces of incentive information in association with the respective pieces of worker identification information in the incentive balance information storage means. The incentive processing device comprises incentive payment possibility determination means for obtaining, from the payment terminal, consumption information containing the worker identification information identifying a worker who is making consumption, to-be-consumed money information identifying an amount of money to be paid by the worker for the consumption, and the consumption destination identification information identifying the consumption destination where the consumption is being made, referring to the company specification information storage means and, based on the obtained worker identification information, extracting the company identification information identifying the company providing salary to the worker, referring to the consumption condition information storage means and, based on the extracted company identification information, extracting the consumption condition designated by the company for provision of the incentive, referring to the consumption destination information storage means and, based on the obtained consumption destination identification information, identifying the consumption destination where the consumption is being made, and then determining whether the identified consumption destination satisfies the extracted consumption condition. The incentive processing device comprises incentive payment processing means for, if the incentive payment possibility determination means determines that the consumption condition is satisfied, subtracting the to-be-consumed money information from the incentive information to thereby calculate a balance, and registering the balance in the incentive balance information storage means. The above are the basic features of the incentive processing device.

In an incentive processing system using this incentive processing device, the personnel attendance salary calculation device comprises means for transmitting, to the incentive processing device, the incentive provision information, which contains at least the pieces of worker identification information identifying workers and the pieces of incentive information indicating the values of the incentives provided to the workers. Also, the payment terminal comprises means for transmitting, to the incentive processing device, the consumption information, which contains the worker identification information identifying a worker who is making consumption, the to-be-consumed money information identifying the amount of money to be paid by the worker for the consumption, and the consumption destination identification information identifying the consumption destination where the worker is making the consumption.

Also, the incentive processing device according to the present invention is configured to be capable of communicating further through the network with worker terminals utilized by the workers when the payment terminal is an device installed at a store where the workers make consumption, and after obtaining the consumption information but before extracting the company identification information based on the worker identification information contained in the obtained consumption information, the incentive payment possibility determination means refers to the incentive balance information storage means, extracts the incentive information registered based on the worker identification information contained in the obtained consumption information, and compares the extracted incentive information and the to-be-consumed money information contained in the obtained consumption information. Further, if determining based on a result of the comparison that a value of the incentive information is greater or equal, the incentive payment possibility determination means transmits an inquiry notification for checking whether to proceed with a payment process to the worker terminal. This inquiry notification can contain, for example, at least information indicating the value of the incentive available to the worker (incentive information) and information indicating the amount of money to be consumed by the worker (to-be-consumed money information). Then, if receiving an approval reply as an indication to proceed with the payment process from the worker terminal, the incentive payment possibility determination means can extract the company identification information and the consumption condition, identify the consumption destination, and determine whether the consumption condition is satisfied.

In the incentive processing system using this incentive processing device, the worker terminal further comprises means for receiving the inquiry notification for checking whether to proceed with the payment process from the incentive processing device, and means for transmitting the approval reply as an indication to proceed with the payment process to the incentive processing device.

Also, the incentive processing device according to the present invention is configured to be capable of communicating further with the worker terminal through the network, after obtaining the consumption information but before extracting the company identification information based on the worker identification information contained in the obtained consumption information, the incentive payment possibility determination means refers to the incentive balance information storage means, extracts the incentive information registered based on the worker identification information contained in the obtained consumption information, and compares the extracted incentive information and the to-be-consumed money information contained in the obtained consumption information, and if determining that a value of the incentive information is smaller, the incentive payment possibility determination means transmits to the worker terminal an inquiry notification for checking whether to proceed with a payment process by paying a balance due by other means than payment using an incentive. Then, if receiving an approval reply as an indication to proceed with the payment process from the worker terminal, the incentive payment possibility determination means can extract the company identification information and the consumption condition, identify the consumption destination, and determine whether the consumption condition is satisfied. Then, the incentive payment processing means defines a value of subtraction of the to-be-consumed money information from the incentive information as "0" and registers the "0" as a balance in the incentive balance information storage means.

Also, the incentive processing device according to the present invention is configured to be capable of communicating further with the worker terminal through the network, after obtaining the consumption information but before extracting the company identification information based on the worker identification information contained in the obtained consumption information, the incentive payment possibility determination means refers to the incentive balance information storage means, extracts the incentive information registered based on the worker identification information contained in the obtained consumption information, and compares the extracted incentive information and the to-be-consumed money information contained in the obtained consumption information, and if determining that a value of the incentive information is smaller, the incentive payment possibility determination means transmits, to the personnel attendance salary calculation device, a first inquiry notification containing the worker identification information and balance due information indicating a difference between the to-be-consumed money information and the incentive information, the first inquiry notification being for checking whether the balance due is payable by referring to an up-to-date salary scheduled to be provided to the worker. If receiving a payment possible reply indicating that the payment is possible from the personnel attendance salary calculation device, the incentive payment possibility determination means transmits a second inquiry notification for checking whether to proceed with the payment process by deducting the balance due from the salary scheduled to be provided to the worker terminal. Then, if receiving an approval reply as an indication to proceed with the payment process from the worker terminal, the incentive payment possibility determination means can extract the company identification information and the consumption condition, identify the consumption destination, and determine whether the consumption condition is satisfied. Then, the incentive payment processing means subtracts the to-be-consumed money information from the incentive information to thereby calculate a value of the balance due and registers the value of the balance due as a balance in the incentive balance information storage means.

In the incentive processing system using this incentive processing device, the personnel attendance salary calculation device further comprises means for receiving, from the incentive processing device, the first inquiry notification, which contains the worker identification information and the balance due information, for checking whether the balance due is payable by referring to the up-to-date salary scheduled to be provided to the worker, and means for transmitting the payment possible reply, which indicates that the payment is possible, to the incentive processing device. Also, the worker terminal further comprises means for receiving the second inquiry notification for checking whether to proceed with the payment process from the incentive processing device, and means for transmitting the approval reply as an indication to proceed with the payment process to the incentive processing device.

Also, the incentive processing device according to the present invention is such that when obtaining the incentive provision information from the personnel attendance salary calculation device, the incentive information registration means of the above incentive processing device registers the pieces of incentive information contained in the obtained incentive provision information in place of balances of pieces of incentive information registered in the incentive balance information storage means.

Also, the incentive processing device according to the present invention is such that when obtaining the incentive provision information from the personnel attendance salary calculation device, the incentive information registration means of the above incentive processing device adds the pieces of incentive information contained in the obtained incentive provision information to balances of pieces of incentive information registered in the incentive balance information storage means and registers sums.

Also, the incentive processing device according to the present invention may be configured to be capable of communicating further through the network with worker terminals utilized by the workers, and the above incentive processing device may further comprise incentive information transmission means for, when obtaining worker identification information from any of the worker terminals, referring to the incentive balance information storage means, extracting the incentive information registered based on the worker identification information, and transmitting the extracted incentive information to the worker terminal.

In the incentive processing system using this incentive processing device, the worker terminal further comprises means for receiving the incentive information from the incentive processing device, and means for displaying the received incentive information.

Also, the incentive processing device according to the present invention may be such that the incentive information registration means of the above incentive processing device obtains, for each worker, consumption destination region information and incentive information set for each consumption destination region as incentive provision information, and stores, for each worker, the consumption destination region information and the incentive information in association with each other in the incentive balance information storage means, and the incentive information transmission means refers to the incentive balance information storage means, extracts the consumption destination region information and the incentive information registered based on the worker identification information, and transmits the extracted incentive information with the consumption destination region information associated therewith to the worker terminal.

In the incentive processing system using this incentive processing device, the worker terminal further comprises means for receiving the incentive information with the consumption destination region information associated therewith from the incentive processing device, and means for displaying the received incentive information with the consumption destination region information associated therewith.

Also, the incentive processing device according to the present invention may be such that the incentive information registration means of the above incentive processing device obtains, for each worker, business partner store information and incentive information set for each business partner store as incentive provision information, and stores, for each worker, the business partner store information and the incentive information in association with each other in the incentive balance information storage means, and the incentive information transmission means refers to the incentive balance information storage means, extracts the business partner store information and the incentive information registered based on the worker identification information, and transmits the extracted incentive information with the business partner store information associated therewith to the worker terminal.

In the incentive processing system using this incentive processing device, the worker terminal further comprises means for receiving the incentive information with the business partner store information associated therewith from the incentive processing device, and means for displaying the received incentive information with the business partner store information associated therewith.

Also, the incentive processing device according to the present invention may be such that the above incentive processing device further comprises incentive payment notification means for, after the incentive payment processing means calculates the balance of the incentive information, transmitting a payment completion notification indicating that payment has been completed using the incentive to the payment terminal.

In the incentive processing system using this incentive processing device, the payment terminal further comprises means for receiving the payment completion notification from the incentive processing device, and means for displaying the received payment completion notification.

Also, the incentive processing device according to the present invention may be such that the above incentive processing device further comprises incentive balance notification means for transmitting the balances of the pieces of incentive information on the respective workers stored in the incentive balance information storage means to the personnel attendance salary calculation device at predetermined time intervals.

In the incentive processing system using this incentive processing device, the personnel attendance salary calculation device further comprises means for receiving the balances of the pieces of incentive information from the incentive processing device.

Also, the incentive processing device according to the present invention may be such that the above incentive processing device further comprises incentive payment information storage means for storing, in association with each other, the pieces of worker identification information, the pieces of consumption destination identification information, and pieces of consumed money information on payments with incentives made with the incentive payment processing means, and the incentive balance notification means transmits the pieces of consumed money information on respective consumption destinations stored in the incentive payment information storage means to the personnel attendance salary calculation device at predetermined time intervals.

In the incentive processing system using this incentive processing device, the personnel attendance salary calculation device further comprises means for receiving the pieces of consumed money information on the respective consumption destinations from the incentive processing device.

Moreover, in the present invention, an incentive processing method with the incentive processing device according to the present invention can be implemented by executing an incentive processing program that causes a computer to function as the above incentive processing device.

### Advantageous Effects of Invention

The incentive processing device of the present invention is capable of determining whether consumption by a worker satisfies a consumption condition designated by a company, and if determining that the consumption condition is satisfied, subtracting the amount of money to be consumed from an incentive provided to the worker by the company to make the payment. Thus, it is possible to provide a technique that enables a company to contribute to the economic activities of its community, business partners, and so on through consumption by its workers. Moreover, the incentive that the company provides to its workers will lead to higher real incomes and better lives for the workers, and the company is also expected to be appreciated by the workers as a company with generous benefits, as well as by the community and business partners for which the consumption was made.

Furthermore, by combining provision of salary and a payment service in digital money based on a blockchain technology, it will be possible to prevent fraudulent use of subsidies and subventions aimed at regional revitalization and the like, as well as of the incentive provided by the company.

### Brief Description of the Drawings

Fig. 1 is a functional block diagram illustrating functions included in a first incentive processing device according to the present invention.
Fig. 2 is a diagram illustrating an example of data stored in a company specification information database included in the first incentive processing device according to the present invention.
Fig. 3 is a diagram illustrating an example of data stored in a consumption condition information database included in the first incentive processing device according to the present invention.
Fig. 4 is a diagram illustrating an example of data stored in a consumption destination information database included in the first incentive processing device according to the present invention.
Fig. 5A is a diagram illustrating an example of basic data stored in an incentive balance information database included in the first incentive processing device according to the present invention, and Fig. 5 B is a diagram illustrating an example of data having a plurality of items stored in an incentive balance information database included in the first incentive processing device according to the present invention.
Fig. 6 is a sequence chart illustrating an example of a system using the first incentive processing device according to the present invention.
Fig. 7 is a sequence chart illustrating an example of a system using the first incentive processing device according to the present invention.
Fig. 8 is a diagram illustrating an example of an inquiry about whether to perform a payment process displayed on a worker terminal in the present invention.
Fig. 9 is a sequence chart illustrating an example of a system using the first incentive processing device according to the present invention.
Fig. 10 is a diagram illustrating an example of an inquiry about whether to pay a balance due by other means displayed on the worker terminal in the present invention.
Fig. 11 is a sequence chart illustrating an example of a system using the first incentive processing device according to the present invention.
Fig. 12 is a diagram illustrating an example of an inquiry about whether to pay a balance due by salary deduction displayed on the worker terminal in the present invention.
Fig. 13 is a flowchart illustrating an example of processing in the first incentive processing device according to the present invention.
Fig. 14 is a flowchart illustrating an example of processing in the first incentive processing device according to the present invention.
Fig. 15 is a flowchart illustrating an example of processing in the first incentive processing device according to the present invention.
Fig. 16 is a functional block diagram illustrating functions included in a second incentive processing device according to the present invention.
Fig. 17 is a sequence chart illustrating an example of a system using the second incentive processing device according to the present invention.
Fig. 18 is a diagram illustrating an example of incentive information displayed on a worker terminal in the present invention.
Fig. 19 is a diagram illustrating an example of pieces of incentive information on a plurality of items displayed on the worker terminal in the present invention.
Fig. 20A is a diagram illustrating an example of detailed incentive information of a first item displayed on the worker terminal in the present invention, and Fig. 20B is a diagram illustrating an example of detailed incentive information of a second item displayed on the worker terminal in the present invention.
Fig. 21 is a flowchart illustrating an example of processing in the second incentive processing device according to the present invention.
Fig. 22 is a functional block diagram illustrating functions included in a third incentive processing device according to the present invention.
Fig. 23 is a sequence chart illustrating an example of a system using the third incentive processing device according to the present invention.
Fig. 24 is a diagram illustrating an example of a payment completion notification displayed on a worker terminal in the present invention.
Fig. 25 is a flowchart illustrating an example of processing in the third incentive processing device according to the present invention.
Fig. 26 is a functional block diagram illustrating functions included in a fourth incentive processing device according to the present invention.
Fig. 27 is a sequence chart illustrating an example of a system using the fourth incentive processing device according to the present invention.
Fig. 28 is a flowchart illustrating an example of processing in the fourth incentive processing device according to the present invention.
Fig. 29 is a functional block diagram illustrating functions included in a fifth incentive processing device according to the present invention.
Fig. 30 is a diagram illustrating an example of data stored in an incentive payment information database included in the fifth incentive processing device according to the present invention.
Fig. 31 is a sequence chart illustrating an example of a system using the fifth incentive processing device according to the present invention.
Fig. 32 is a flowchart illustrating an example of processing in the fifth incentive processing device according to the present invention.
FIG. 33 is a functional block diagram illustration functions included in the sixth incentive processing device according to the present invention.
FIG. 34 is a diagram illustration an example of data stored in a payer specification information database included in the sixth incentive processing device according to the present invention.
Fig. 35 is a diagram illustrating an example of data stored in a consumption condition information database included in the sixth incentive processing device according to the present invention.
Fig. 36 is a diagram illustrating an example of data stored in a consumption destination information database included in the sixth incentive processing device according to the present invention.
FIG. 37 is a diagram illustration an example of data stored in an incentive balance information database included in the sixth incentive processing device according to the present invention.
FIG. 38 is a sequence chart illustration an example of a system using the sixth incentive processing device according to the present invention.
FIG. 39 is a flowchart illustrating an example of a processing in the sixth incentive processing device according to the present invention.

### Description of Embodiments

Hereinbelow, examples of an incentive processing device according to the present invention will be described based on the drawings.

An incentive processing device 1 according to the present invention is an device that makes it possible to, when a worker consumes at a store in a particular region or at a particular business partner designated by a company, pay all or part of the amount of money to be consumed by using an incentive which the company refers to as an allowance as an employee benefit and provides to the worker, and figure out the degree of contribution to the economic activity of the store in the particular region or the particular business partner.

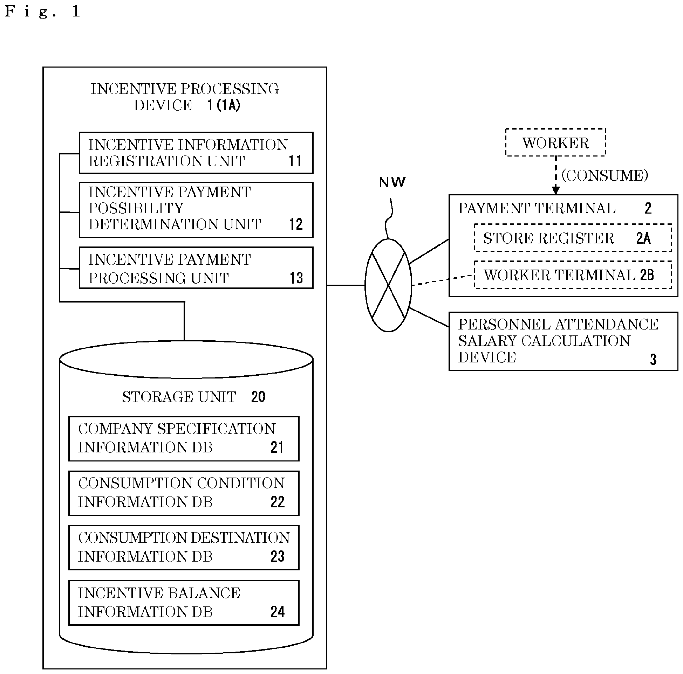

As illustrated in Figs. 1, 16, 22, 26, and 29, the incentive processing device 1 according to the present invention is configured to be capable of communicating with each of payment terminals 2 and a personnel attendance salary calculation device 3 through a network NW

The incentive processing device 1 is implemented with a so-called server computer or the like, and includes hardware resources such as a CPU (Central Processing Unit), a RAM (Random Access Memory), a ROM (Read Only Memory), and a hard disk drive, and software resources such as computer programs to be executed by the CPU.

The incentive processing device 1 also includes a storage unit storing databases necessary for incentive processing, and so on.

The incentive processing device 1 further includes a communication device that transmits and receives information to be used in processing by the CPU and information to be stored in the storage unit through a network such as the Internet or an LAN.

The payment terminals 2 are devicees to be used a worker to make payment for consumption, and include, for example, a cash register installed at a store and having a network function (hereinafter simply referred to as "store register") 2A, and a mobile terminal possessed by the worker and having a network function (hereinafter simply referred to as "worker terminal") 2B. These payment terminals 2A and 2B are implemented by installing respective dedicated programs therein.

These dedicated programs contain an address on the network (URL) or the like for accessing the incentive processing device 1, and are registered in a predetermined server on the network. Thus, the payment terminals 2A and 2B are capable of obtaining their dedicated programs by accessing the predetermined server on the network and downloading them.

Meanwhile, the store register 2A is a POS (Point of Sale) terminal or a computer with the function of a POS terminal. The store register 2A, for example, executes processing necessary for payment to be made by a worker for purchasing a product, and provides the incentive processing device 1 with worker identification information identifying the worker purchasing the product (hereinafter referred to as "worker ID"), to-be-consumed money information, and consumption destination identification information identifying the consumption destination (hereinafter referred to as "consumption destination ID").

Specifically, the store register 2A is capable of generating the to-be-consumed money information by: obtaining price information by receiving an input (typing) of numeric keys corresponding to the price of the product or by reading with a code scanner a one-dimensional code (such as a JAN code or an EAN code) or a two-dimensional code (such as a stack code or a matrix code) attached to the product; and calculating the amount of money to be paid with a calculation function of the register.

Also, the store register 2A has a credit card-electronic money processing function such as a card reader-writer, as well as the function of obtaining price information on a product and calculating the amount of money to be consumed (amount of money to be paid) when a worker purchases a product. Thus, by having the credit card-electronic money processing function, the store register 2A is capable of handling payment by cash as a matter of course, and also payment by a credit card, a debit card, a prepaid card, electronic money, and so on.

The store register 2A also has a function of obtaining a worker ID.

As mentioned above, this worker ID is information on a payment card, such as a credit card, information on a mobile phone compatible with NFC (Near Field Communication) (incorporating an NFC chip), and information on a membership card, and can be obtained by using the credit card-electronic money processing function of the store register 2A. In short, the worker ID can be obtained by a card reader-writer (NFC handling function) incorporated in (or connected to) the register.

The store register 2A may further have a function of reading an optical symbol displayed on a worker's mobile terminal. Specifically, when a worker pays an amount of money to be consumed by using an incentive provided from the company, the store register 2A reads an optical symbol including the worker ID and the address on the network (URL) for accessing the incentive processing device 1, and transmits the consumption destination ID, the to-be-consumed money information, and the worker ID to the extracted URL

Note that in the present invention, the store register 2A includes a terminal capable of receiving and transmitting data and receiving and outputting data through a network, such as a computer or the like that manages a virtual store on a website, or a so-called online shop, for selling products through the Internet. The store register 2A also includes a mobile terminal (so-called handy register) to be utilized by an individual working at a store for selling products.

The worker terminal 2B, on the other hand, is a mobile device such as a smartphone with an optical symbol reading function such as a camera and a number entering function such as a keyboard, and provides a worker ID, to-be-consumed money information, and a consumption destination ID to the incentive processing device 1, for example.

Specifically, the worker terminal 2B is capable of capturing an image of an optical symbol displayed at a store with a camera unit to obtain consumption destination information such as a consumption destination ID recorded in this optical symbol, and also receiving an input of a numerical value as an amount of money to be consumed via a keyboard unit. Also, the worker terminal 2B is capable of obtaining the consumption destination information by receiving the telephone number of the consumption destination store via the keyboard, and also receiving an input of a numerical value as an amount of money to be consumed via the keyboard unit.

In order for a mobile terminal such as a smartphone to function as the worker terminal 2B, the worker needs to obtain a dedicated program, as mentioned above, through a predetermined procedure as a preparation. With this dedicated program installed, the worker terminal 2B captures and reads an image of an optical symbol. Then, the worker terminal 2B decodes the store ID or the like recorded in the optical symbol and also receives an input of an amount of money to be consumed. Thereafter, the worker terminal 2B extracts the worker information and the address on the network (URL) for accessing the incentive processing device 1, which are stored in a predetermined storage area, and transmits the store ID, the to-be-consumed money information, and the user identification information to the extracted URL

Note that an optical symbol is information recorded in an optically identifiable manner and refers to a one-dimensional code such as a barcode or a two-dimensional code such as a stack code or a matrix code.

The personnel attendance salary calculation device 3 is an device that calculates the salaries of workers based on the attendance and leaving times of the workers and personnel labor information on the workers. This personnel attendance salary calculation device 3 is configured to be capable of communicating through the network NW with a so-called Internet time recorder, which is an device arranged to perform attendance management such as obtaining the attendance times and leaving times of workers. Thus, the personnel attendance salary calculation device 3 performs a process of calculating the amount of compensation for labor provided by each worker based on the attendance and leaving time information on the worker obtained by the Internet time recorder.

Also, the personnel attendance salary calculation device 3 performs a process of calculating the salary of each worker by adding various allowances such as overtime allowance, commuting allowance, and dependency allowance identified based on the personnel labor information on the worker to the calculated amount of compensation for labor and also by subtracting the amounts of deduction such as taxes, insurance annuity, and the like from the calculated amount of compensation for labor.

In the present invention, the personnel attendance salary calculation device 3 may further have a function of converting the amount of salary of each worker calculated based on the attendance and leaving times of the worker and the personnel labor information on the worker into electronic money information and managing it in a virtual account for the worker.

Note that incentive processing devicees 1A, 1B, 1C, ID, IE, and IF according to later-described embodiments of the present invention are each illustrated as, but not limited to, a single component. They may be configured of a plurality of computers or the like. Alternatively, the incentive processing devicees 1A, 1B, 1C, ID, IE, and IF according to the embodiments may be configured as a cloud or blockchain.

Further, in a case where an individual who calculates the salary of each worker based on the attendance and leaving times of and personnel labor information on the worker runs the incentive processing service, it is possible to employ an device having both the function of the personnel attendance salary calculation device 3 and the function of the incentive processing device 1 described above.

### <First Embodiment

First, a basic configuration of a first incentive processing device according to the present invention will be described.

The embodiments to be discussed below are preferred specific examples of the present invention and thus involve various technical limitations, but the scope of the present invention is not limited to these embodiments unless there is a particular statement indicating a limitation in the following description.

Also, in the present invention, consumption includes not only purchasing a product but also receiving a service, and includes at least transactions in general that require compensation.

As illustrated in Fig. 1, the first incentive processing device 1A is configured to be capable of communicating with each of payment terminals 2 and a personnel attendance salary calculation device 3 through a network NW

This first incentive processing device 1A includes an incentive information registration unit 11, an incentive payment possibility determination unit 12, an incentive payment processing unit 13, and a storage unit 20, and the incentive processing device 1 according to each embodiment to be described later includes at least these as basic components.

Also, the storage unit 20 includes a company specification information database (hereinafter abbreviated as "company specification information DB") 21, a consumption condition information database (hereinafter abbreviated as "consumption condition information DB") 22, a consumption destination information database (hereinafter abbreviated as "consumption destination information DB") 23, and an incentive balance information database (hereinafter abbreviated as "incentive balance information DB") 24.

Specifically, the incentive processing device 1A functions as an device including the incentive information registration unit 11, the incentive payment possibility determination unit 12, the incentive payment processing unit 13, and so on by loading various programs (such as an OS and application software) stored in an auxiliary storage device (e.g. ROM) into a main storage device (RAM) and executing them with a CPU.

The company specification information DB 21 is means for storing company information for each worker to specify the company that provides an incentive to the worker. Specifically, the company specification information DB 21 can be configured, for example, by associating worker information tables each storing personal information identifying a worker such as the worker's employee number, name, address, telephone number, and e-mail address, and company information tables each storing company related information such a company's name and address. Thus, by selecting one of the above-mentioned pieces of worker personal information as a worker ID and using a worker information table, a worker can be identified with any one of the pieces of personal information.

Note that each piece of personal information stored in a worker information table may be used alone or in combination with another or others to identify the corresponding worker.

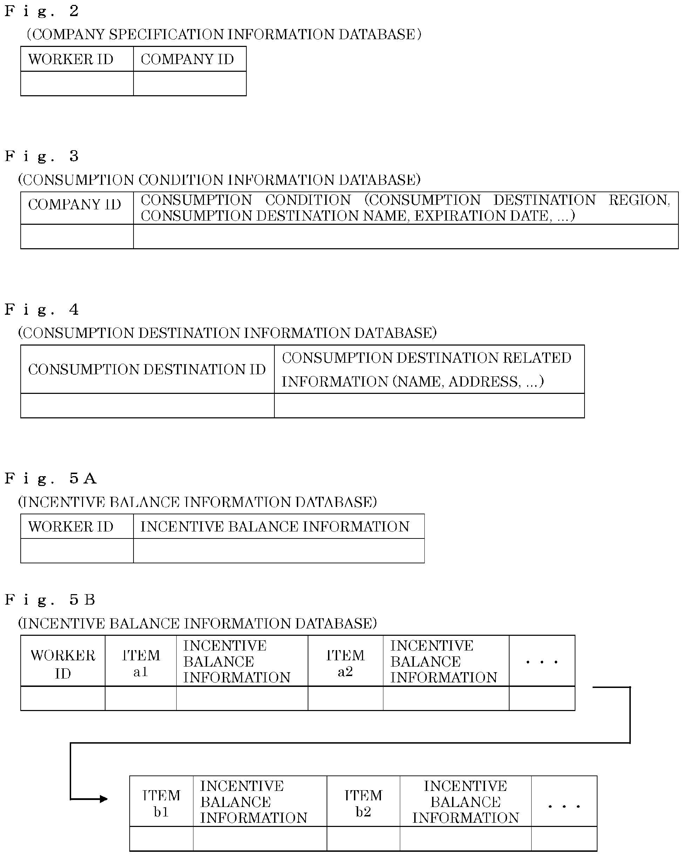

In this company specification information DB 21, pieces of company identification information (hereinafter referred to as "company ID") identifying companies are stored in association with workers ID identifying workers who makes consumption as illustrated in Fig. 2, for example.

The consumption condition information DB 22 is means for storing, for each company, a consumption condition designated by the company for making payment with the incentive provided to its worker. Specifically, the consumption condition information DB 22 stores a desired consumption condition such as a consumption destination' name, address, store name, or brand (product name), or an expiration date, and each company can freely set and register the consumption condition by connecting to the incentive processing device 1 (1A) with a communication terminal capable of performing communication through a network such as the personnel attendance salary calculation device 3.

Note that there may be only a single consumption condition or a plurality of consumption conditions. When a plurality of consumption conditions are set, all of the plurality of consumption conditions may be intended and set to be satisfied, or any one of the plurality of consumption conditions may be intended or set to be satisfied.

In this consumption condition information DB 22, consumption conditions are stored in association with company ID as illustrated in Fig. 3, for example.

The consumption destination information DB 23 is means for storing consumption destination information for each consumption destination such as the consumption destination's name, address, telephone number, and brand (product name). That is, the consumption destination information DB 23 stores only pieces of consumption destination information.

In this consumption destination information DB 23, the pieces of consumption destination information are stored in association with consumption destination ID as illustrated in Fig. 4, for example.

The incentive balance information DB 24 is means for storing, for each worker, information on the balance of the incentive provided by the corresponding company. Specifically, the incentive balance information DB 24 stores pieces of monetary information corresponding to monetary values, and is rewritten as appropriate when a worker makes payment by using the incentive and when a company provides a new incentive.

This incentive balance information DB 24 stores pieces of incentive balance information in association with worker ID as illustrated in Fig. 5A, for example.

Here, the worker ID registered in the company specification information DB 21 and the incentive balance information DB 24 are unique identification labels given by the administrator of the incentive processing service to identify the workers utilizing the service. Also, each worker ID mentioned in the present invention includes personal information on the corresponding worker such as mobile phone information (e.g. telephone number or contracted individual's name) to be used by the worker to make electronic payment with an incentive, and card information (e.g., card number or member name) on a membership card issued to the worker registered to receive the incentive processing service.

That is, in the present invention, the mobile phone information to be used by a worker to make electronic payment or the card information on a membership card issued to the worker, which has been registered in advance by the worker as personal information to receive the incentive processing service, is associated with the corresponding worker ID.

Thus, a worker ID can be identified from the mobile phone information, the card information, or the like used by the corresponding worker to pay an amount of money to be consumed, and the corresponding incentive balance information can be registered in the incentive balance information DB 24.

Also, in the present invention, in a case where there is a balance due when payment is made using an incentive, the balance due can be paid by using cash, a credit card, a debit card, a prepaid card, an electronic money (which has an issuer and is online-payable), a cryptocurrency (a virtual currency, such as bitcoin, which has no issuer and is online-payable), or a gift certificate.

The incentive information registration unit 11 is means for obtaining incentive provision information containing at least worker ID and pieces of incentive information indicating the values of the incentives provided to workers from the personnel attendance salary calculation device 3, and registering the pieces of incentive information in association with the respective worker ID in the incentive balance information DB 24.

As described above, the first incentive processing device 1A is configured to be capable of communicating with the personnel attendance salary calculation device 3 (companies) through a network, and is configured to obtain incentive provision information and register pieces of incentive information on workers. In this way, each time a company provides a new incentive, the first incentive processing device 1A can check the existence of the company and its worker and prove it to a third party.

The incentive information registration unit 11 is also means for, when obtaining incentive provision information from the personnel attendance salary calculation device 3, registering the pieces of incentive information contained in the obtained incentive provision information in place of the balances of pieces of incentive information registered in the incentive balance information DB 24.

By being thus configured to, when obtaining incentive provision information from the personnel attendance salary calculation device (company) 3, register the obtained pieces of incentive information in place of the balances of already registered pieces of incentive information, the first incentive processing device 1A can set an expiration date before which the incentives can be utilized as a consumption condition.

Also, when obtaining incentive provision information from the personnel attendance salary calculation device 3, the incentive information registration unit 11 may add the pieces of incentive information contained in the obtained incentive provision information to the balances of the pieces of incentive information registered in the incentive balance information DB 24 and register the sums.

By being thus configured to, when obtaining incentive provision information from the personnel attendance salary calculation device (company) 3, add the obtained pieces of incentive information to the balances of the already registered pieces of incentive information and registers the sums, the first incentive processing device 1A can carry over incentives not used in the current month to the next and subsequent months.

The incentive payment possibility determination unit 12 is means for obtaining from the payment terminal 2A (2B) consumption information containing a worker ID identifying a worker who is making consumption, to-be-consumed money information indicating the amount of money to be paid by the worker for the consumption, and the consumption destination ID identifying the consumption destination where the consumption is being made, and determining whether the consumption by the worker satisfies the consumption condition for payment using an incentive.

Specifically, after obtaining the consumption information, the incentive payment possibility determination unit 12 refers to the company specification information DB 21 and, based on the obtained worker ID, extracts the company ID identifying the company providing salary to the corresponding worker.

Also, after extracting the company ID, the incentive payment possibility determination unit 12 refers to the consumption condition information DB 22 and, based on the extracted company ID, extracts the consumption condition designated by the company for providing an incentive.

Further, the incentive payment possibility determination unit 12 refers to the consumption destination information DB 23 and, based on the obtained consumption destination ID, identifies the consumption destination where the consumption was made, and determines whether the identified consumption destination satisfies the extracted consumption condition.

That is, the incentive payment possibility determination unit 12 firstly extracts a company ID based on the obtained worker ID. Then, the incentive payment possibility determination unit 12 extracts a consumption condition based on the extracted company ID. Thereafter, the incentive payment possibility determination unit 12 identifies a consumption destination based on the obtained consumption destination ID. Assuming that the extracted consumption condition is set as, for example, "○○○ city", then, the incentive payment possibility determination unit 12 determines whether the identified consumption destination is present in "○○○ city".

The incentive payment processing unit 13 is means for, after payment is made using an incentive provided by a company, registering the balance of the incentive information in the incentive balance information DB 24.

Specifically, when the incentive payment possibility determination unit 12 determines that the consumption condition is satisfied, the incentive payment processing unit 13 subtracts the to-be-consumed money information from the incentive information to thereby calculate the balance, and registers the balance in the incentive balance information DB 24.

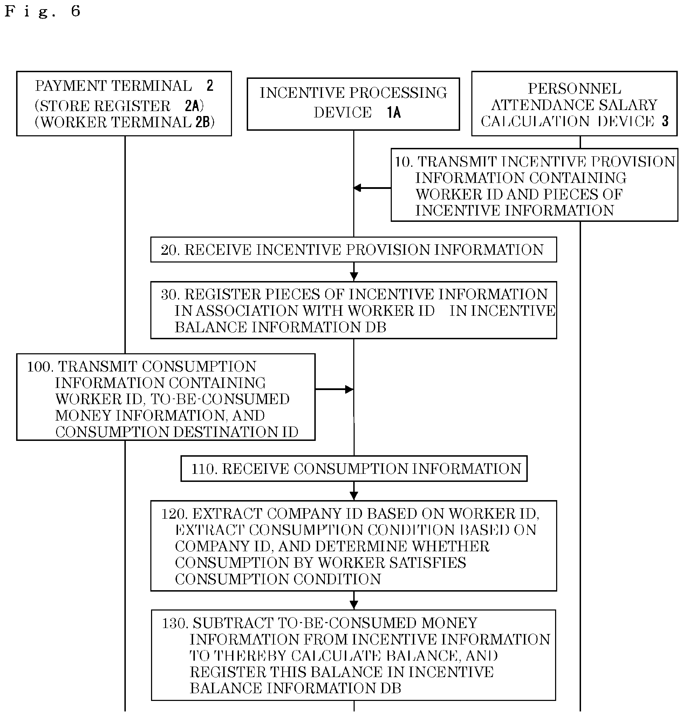

Next, a flow of processing in an incentive processing system for executing an incentive processing method according to the first embodiment of the present invention (hereinafter referred to as "first method") will be described with reference to Fig. 6.

Note that the first incentive processing device 1A of the present invention implements the first method described below by executing a first computer program.

Firstly, as illustrated in Fig. 6, the personnel attendance salary calculation device 3 transmits incentive provision information containing worker ID and pieces of incentive information to the incentive processing device lAin advance (10).

The incentive processing device 1A in turn receives the incentive provision information transmitted from the personnel attendance salary calculation device 3 (20), and registers the incentive provision information in association with the worker ID in the incentive balance information DB 24 (30).

Then, when a worker makes consumption, the payment terminal 2A (2B) transmits consumption information containing the worker ID identifying the worker who is making the consumption, to-be-consumed money information specifying the amount of money to be paid by the worker for the consumption, and the consumption destination ID identifying the consumption destination where the consumption is being made to the incentive processing device 1A (100).

The incentive processing device 1A in turn receives the consumption information transmitted from the payment terminal 2A (2B) (110).

Here, the worker ID, the to-be-consumed money information, and the consumption destination ID can be transmitted to the incentive processing device 1A as below, for example.

Firstly, in the case of making the payment by using the store register 2A as the payment terminal 2, it is done by causing the store register 2A to calculate the amount of money to be consumed (the amount of money to be paid), obtain the worker ID with a card reader-writer or the like, and then transmit the calculated to-be-consumed money information, the obtained worker ID, and the consumption destination IDtored in the store register 2A to the incentive processing device 1A.

Also, in the case of making the payment by using the store register 2A as the payment terminal 2, it may be done by causing the store register 2A to calculate the amount of money to be consumed (the amount of money to be paid), read an optical symbol containing the consumption destination ID and the worker ID which is generated by reading an optical symbol displayed at the store with the worker's mobile terminal, and transmit the calculated to-be-consumed money information and the read worker ID and consumption destination ID to the incentive processing device 1A.

On the other hand, in the case of making the payment by using the worker terminal 2B as the payment terminal 2, it is done by reading the optical symbol displayed at the store with the worker terminal 2B to thereby obtain the consumption destination ID, entering the amount of money to be consumed into the worker terminal 2B, and causing the worker terminal 2B to transmit the obtained consumption destination ID, the entered to-be-consumed money information, and the worker IDtored in the worker terminal 2B to the incentive processing device 1A.

Based on the received worker ID, the incentive processing device 1A refers to the company specification information DB 21 and extracts the company ID identifying the company providing salary to the worker registered in association with the received worker ID. Also, based on the extracted company ID, the incentive processing device 1A refers to the consumption condition information DB 22 and extracts the consumption condition designated by the company registered in association with the extracted company ID for making payment with an incentive. Further, based on the received consumption destination ID, the incentive processing device 1A refers to the consumption destination information DB 23 and identifies the consumption destination information registered in association with the received consumption destination ID, and determines based on the identified consumption destination information whether the consumption by the worker satisfies the extracted consumption condition (120).

Then, the incentive processing device 1A subtracts the to-be-consumed money information from the incentive information to thereby calculate the balance, and registers the balance of the incentive information in the incentive balance information DB 24 (130).

The above is a flow of the basic processing in the incentive processing system for executing the first method using the incentive processing device 1A.

Meanwhile, the incentive payment possibility determination unit 12 may have a function such that, when the payment terminal 2 is the worker terminal 2B, the incentive payment possibility determination unit 12 after obtaining consumption information but before extracting the company ID based on the worker ID contained in the consumption information refers to the incentive balance information DB 24 and extracts the incentive information registered based on the worker ID contained in the obtained consumption information, and compares the extracted incentive information and the to-be-consumed money information contained in the obtained consumption information.

In this case, the incentive payment possibility determination unit 12 has a function of transmitting an inquiry notification for checking the amount of money to be consumed and checking whether to proceed with a payment process using the incentive to the worker terminal 2B when the comparison between the incentive information and the to-be-consumed money information results in a determination that the value of the incentive information is greater or equal. This inquiry notification can contain the incentive information and the to-be-consumed money information, for example.

Moreover, the incentive payment possibility determination unit 12 has a function of receiving reply information from the worker terminal 2B. If receiving from the worker terminal 2B an approval reply for making the payment using the incentive, the incentive payment possibility determination unit 12 extracts the company ID and the consumption condition, identifies the consumption destination, and determines whether the consumption condition is satisfied.

Note that the incentive processing device 1A is configured to be capable of communicating further with the worker terminal 2B through a network when the payment terminal 2 is the store register 2A. The incentive payment possibility determination unit 12 transmits an inquiry notification to the worker terminal 2B and receives a reply information from the worker terminal 2B as described above.

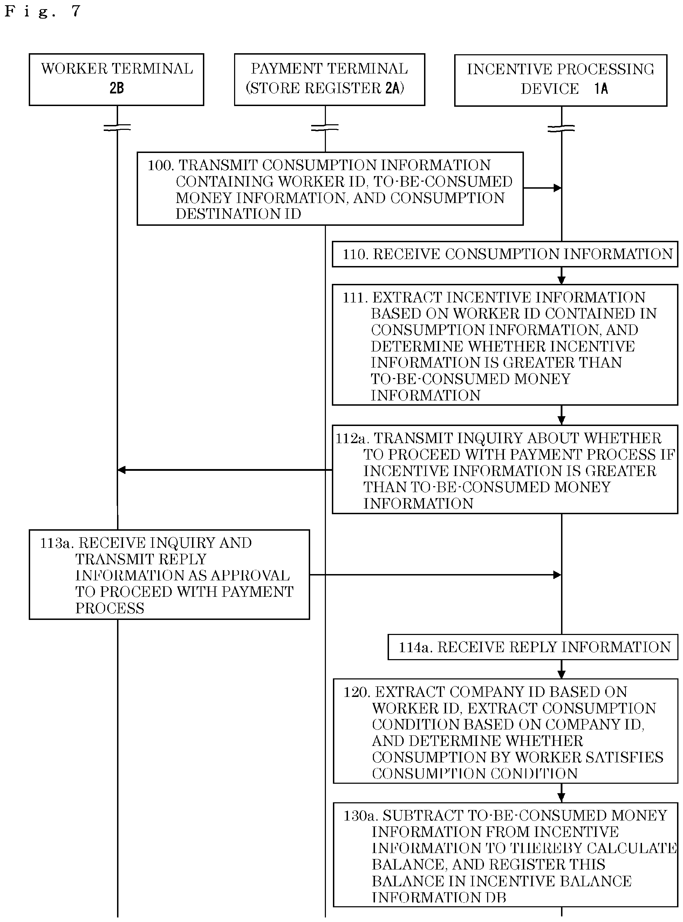

A flow of the processing in this case can be illustrated in Fig. 7.

The above-described processing from (10) to (110) is performed in a similar manner to the above-described basic processing, and description thereof is therefore omitted.

Then, as illustrated in Fig. 7, based on the worker ID contained in the consumption information, the incentive processing device 1A refers to the incentive balance information DB 24 and extracts the incentive balance information registered in association with the worker ID, and determines whether the incentive balance information is greater than the to-be-consumed money information contained in the consumption information (111).

Thereafter, if determining that the incentive balance information is greater than the to-be-consumed money information, the incentive processing device 1A transmits an inquiry notification for checking the amount of money to be consumed and checking whether to proceed with a payment process using the incentive to the worker terminal 2B (112a).

The worker terminal 2B receives the inquiry transmitted from the incentive processing device 1A (113a).

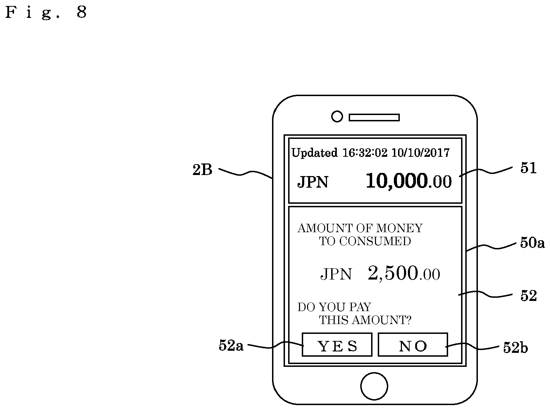

Here, a case where it is checked whether to make payment using an incentive when a worker having an incentive equivalent to a currency value of 10,000 yens consumes 2,500 yens, for example, will be described with reference to Fig. 8 as an example of the inquiry received by the worker terminal 2B.

Fig. 8 illustrates a screen 50a on the worker terminal 2B, and an incentive display area 51 and an inquiry display area 52 are displayed in this screen 50a.

Specifically, in the incentive display area 51 are displayed: the date and time of update of the incentive balance information registered in the incentive balance information DB 24; and the amount of money payable with the incentive the worker has, with "JPN" indicating the currency unit and "10,000.00" representing the value of the incentive. Specifically, "JPN" means Japan, and "10,000.00" means 10,000 yens based on the Japanese currency unit. Thus, the worker has an incentive equivalent to a currency value of 10,000 yens. Also, the worker can check the available incentive balance by looking at the value of the incentive displayed in the incentive display area 51 of the worker terminal 2B.

Also, in the inquiry display area 52, "JPN 2,500.00" is displayed as the amount of money which the worker is to consume (the amount of money to be consumed). Specifically, this means paying 2,500 yens from the incentive of 10,000 yens. Thus, the worker can check whether a false claim is issued from the store terminal 2 to the incentive processing device 1A by looking at the amount of money to be consumed displayed in the inquiry display area 52 of the worker terminal 2B.

Also, in the inquiry display area 52 are displayed a sentence "Do you pay this amount?", and also a "YES" reply button 52a for indicating an intention to accept to make the payment using the incentive and a "NO" reply button 52b for indicating an intention to not accept to make the payment using the incentive.

Note that when, for example, "USA" is displayed instead of JPN" as the country name indicating the currency unit displayed before the value of the incentive, the currency value indicated by the incentive is in the United States dollar. When "GBR" is displayed, the currency value indicated by the incentive is in the Pound sterling. Thus, it is possible to utilize the incentive processing service in all countries in the world.

After receiving the above-described inquiry, the worker terminal 2B transmits reply information on whether to make the payment using the incentive to the incentive processing device 1A (113a). Specifically, the worker having received this inquiry can transmit the reply information by selecting the "YES" reply button 52a or the "NO" reply button 52b, which are displayed in the inquiry display area 52 in the screen 50 on the worker terminal 2B in Fig. 8. Assume here that the reply button 52a is selected to transmit reply information as an approval to proceed with the payment process using the incentive.

The incentive processing device 1A receives the reply information transmitted from the worker terminal 2B (114a).

Then, the incentive processing device 1A refers to the company specification information DB 21 based on the worker ID to extract the company ID, refers to the consumption condition DB 22 based on the extracted company ID to extract the consumption condition, and determines whether the consumption by the worker satisfies the extracted consumption condition (120).

Then, if determining that the consumption by the worker satisfies the extracted consumption condition, the incentive processing device 1A subtracts the value of the to-be-consumed money information from the value of the incentive information to thereby calculate the balance, and registers this balance in the incentive balance information DB 24 (130a).

Also, in this embodiment, when there is a balance due in the payment process using the incentive, the balance due can be paid by other payment means such as cash or a payment card such as a credit card or a debit card.

In this case, the incentive payment possibility determination unit 12 has a function of, when the incentive information and the to-be-consumed money information are compared and the value of the incentive information is determined to be smaller, transmitting to the worker terminal 2B an inquiry notification for checking whether to proceed with the payment process by paying the balance due by other means than payment using an incentive.

Moreover, the incentive payment possibility determination unit 12 has a function of receiving reply information from the worker terminal 2B.

If receiving from the worker terminal 2B an approval reply for paying the balance due by other means than payment using an incentive, the incentive payment possibility determination unit 12 extracts the company ID and the consumption condition, identifies the consumption destination, and determines whether the consumption condition is satisfied.

Also, the incentive payment processing unit 13 has a function of defining the value of subtraction of the to-be-consumed money information from the incentive information as "0" and registering this "0" as the balance of the incentive information in the incentive balance information DB 24 if an approval reply for paying the balance due by other means than payment using an incentive is received and then it is determined that the consumption condition is satisfied.

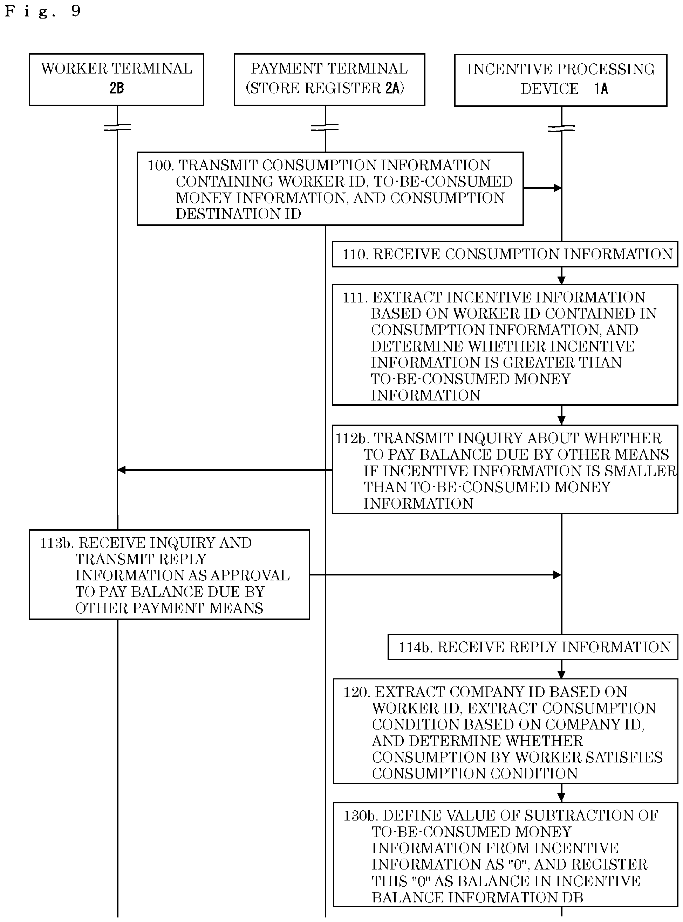

A flow of the processing in this case can be illustrated in Fig. 9.

The above-described processing from (10) to (111) is performed in a similar manner to the above-described basic processing, and description thereof is therefore omitted.

Note that the incentive processing device 1A is configured to be capable of communicating further with the worker terminal 2B through a network when the payment terminal 2 is the store register 2A.

Then, as illustrated in Fig. 9, if the incentive information is smaller than the to-be-consumed money information, the incentive processing device 1A transmits to the worker terminal 2B balance due information and an inquiry notification for checking whether to proceed with the payment process by paying the balance due by other means than payment using an incentive (112b).

The worker terminal 2B receives the inquiry transmitted from the incentive processing device 1A (113b).

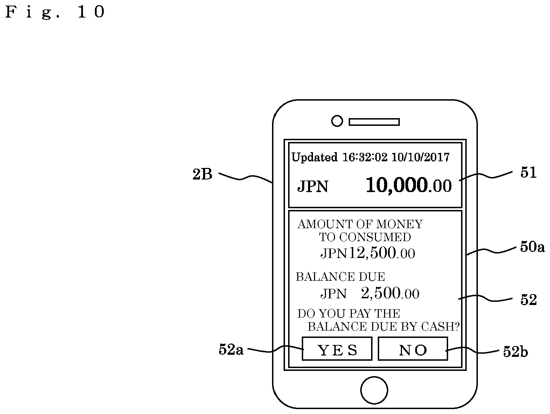

Here, a case where it is checked whether to pay a balance due of 2,500 yens by cash when a worker having an incentive equivalent to a currency value of 10,000 yens consumes 12,500 yens, for example, will be described with reference to Fig. 10 as an example of the inquiry received by the worker terminal 2B.

Like Fig. 8, Fig. 10 illustrates the screen 50a on the worker terminal 2B, and the incentive display area 51 and the inquiry display area 52 are displayed in this screen 50a.

Specifically, in the incentive display area 51 are displayed: the date and time of update of the incentive balance information registered in the incentive balance information DB 24; and the amount of money payable with the incentive the worker has, with "JPN" indicating the currency unit and "10,000.00" representing the value of the incentive.

Also, in the inquiry display area 52, "JPN 12,500.00" is displayed as the amount of money which the worker is to consume, and "JPN 2,500.00" is displayed as the amount of the balance due. Specifically, this means that the incentive can be used to pay 10,000 yens, but is insufficient and 2,500 yens cannot be paid. Also, in the inquiry display area 52 are displayed a sentence "Do you pay the balance due by cash?", and also the "YES" reply button 52a for indicating an intention to accept to pay the balance due by cash, and the "NO" reply button 52b for indicating an intention to not accept to pay the balance due by cash.

After receiving the above-described inquiry, the worker terminal 2B transmits reply information on whether to pay the balance due by cash to the incentive processing device 1A (113a). Specifically, the worker having received this inquiry can transmit the reply information by selecting the "YES" reply button 52a or the "NO" reply button 52b, which are displayed in the inquiry display area 52 in the screen 50 on the worker terminal 2B in Fig. 10. Assume here that the reply button 52a is selected to transmit reply information as an approval to proceed with the payment process by paying the balance due by cash.

The incentive processing device 1A receives the reply information transmitted from the worker terminal 2B (114b). As a result, the incentive processing device 1A obtains a reply from the worker terminal 2B about whether to pay the balance due by cash.

Then, the incentive processing device 1A refers to the company specification information DB 21 based on the worker ID to extract the company ID, refers to the consumption condition DB 22 based on the extracted company ID to extract the consumption condition, and determines whether the consumption by the worker satisfies the extracted consumption condition (120).

Then, if determining that the consumption by the worker satisfies the extracted consumption condition, the incentive processing device 1A defines the value of subtraction of the value of the to-be-consumed money information from the value of the incentive information as "0" and registers this "0" as the balance of the incentive information in the incentive balance information DB 24 (130b).

With the configuration to issue an inquire to the worker terminal 2B about whether to pay a balance due by cash as described above, it is possible to make payment using an incentive even when the upper limit incentive value is exceeded.

Further, in this embodiment, even in a situation where there is a balance due when a worker makes payment with an incentive but the worker does not have enough cash or a payment card such as a credit card or a debit card and therefore cannot pay the balance due by other publicly known payment means, the worker can still pay the balance due. Specifically, by using the credit transaction technique disclosed in Japanese Patent Application No. 2016-055421 by the inventor of the present application, the worker can pay the balance due with the up-to-date salary scheduled to be provided to the worker (which is so-called salary deduction).

In this case, the incentive payment possibility determination unit 12 has a function of, if determining that the value of the incentive information is smaller, transmitting to the personnel attendance salary calculation device 3 a first inquiry notification containing the worker ID and balance due information indicating the difference between the to-be-consumed money information and the incentive information, the first inquiry notification being for checking whether the balance due is payable by referring to the up-to-date salary scheduled to be provided to the worker.

Here, the incentive payment possibility determination unit 12 has a function of, if receiving a payment possible reply indicating that the payment is possible from the personnel attendance salary calculation device 3, further transmitting to the worker terminal 2B a second inquiry notification for checking whether to proceed with the payment process by deducting the balance due from the salary scheduled to be provided.

Moreover, the incentive payment possibility determination unit 12 has a function of receiving reply information from the worker terminal 2B.

If receiving from the worker terminal 2B an approval reply for deducting the balance due from the salary scheduled to be provided, the incentive payment possibility determination unit 12 extracts the company ID and the consumption condition, identifies the consumption destination, and determines whether the consumption condition is satisfied.

Also, the incentive payment processing unit 13 has a function of, when the incentive information and the to-be-consumed money information are compared and the value of the incentive information is determined to be smaller, subtracting the to-be-consumed money information from the incentive information to thereby calculate the balance due, and registering this balance due as the balance of the incentive information in the incentive balance information DB 24.

Specifically, when the incentive information is smaller than the to-be-consumed money information, the balance due may be paid by cash or the like, but the incentive processing device 1A performs processing as below in a case where the company and the worker both have agreed make the payment from the salary scheduled to be provided to the worker.

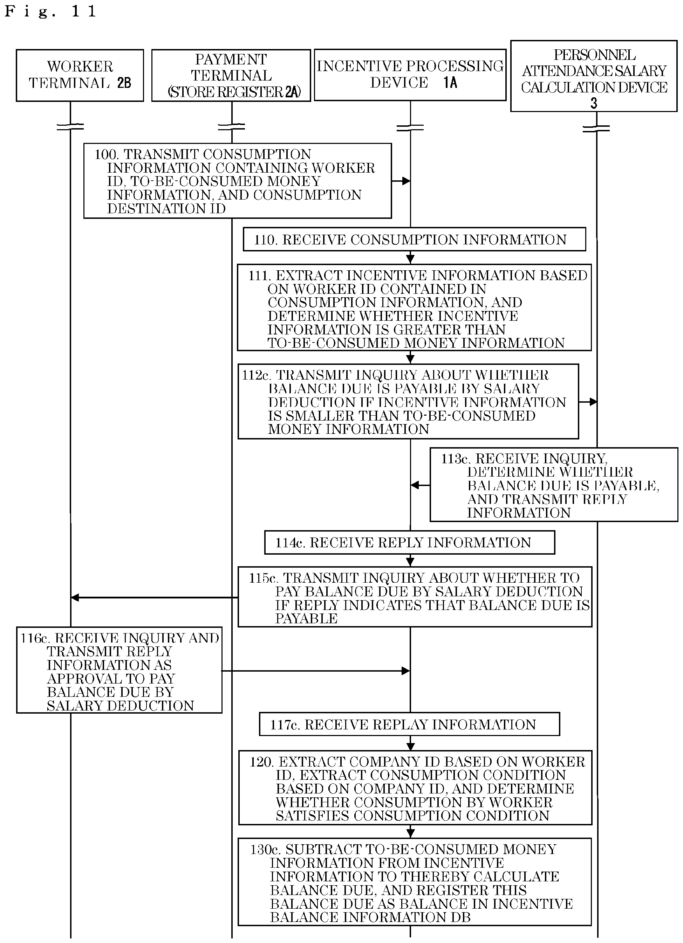

A flow of the processing in this case can be illustrated in Fig. 11.

The above-described processing from (10) to (111) is performed in a similar manner to the above-described basic processing, and description thereof is therefore omitted.

Note that the incentive processing device 1A is configured to be capable of communicating further with the worker terminal 2B through a network when the payment terminal 2 is the store register 2A.

Then, as illustrated in Fig. 11, if the incentive information is smaller than the to-be-consumed money information, the incentive processing device 1A transmits the worker information, the balance due information, and an inquiry about whether the balance due is payable to the personnel attendance salary calculation device 3 (112c).

The personnel attendance salary calculation device 3 receives the inquiry transmitted from the incentive processing device 1A, and determines whether the balance due is payable by referring to the up-to-date salary scheduled to be provided to the worker, and transmits reply information to the incentive processing device 1A (113c).

The incentive processing device 1A receives the reply information transmitted from the personnel attendance salary calculation device 3 (114c).

When the received reply information indicates that the balance due is payable from the salary scheduled to be provided to the worker (that is, salary deduction is possible), the incentive processing device 1A further transmits to the worker terminal 2B an inquiry containing the balance due information and inquiring about whether to deduct the balance due from the salary scheduled to be provided (115c).

The worker terminal 2B receives the inquiry transmitted from the incentive processing device 1A (116c).

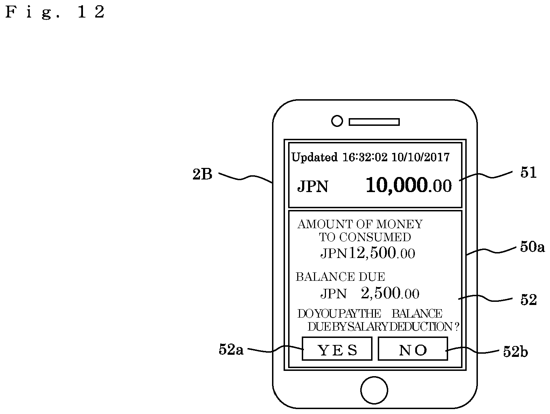

Here, a case where it is checked whether to pay a balance due of 2,500 yens by salary deduction when a worker having an incentive equivalent to a currency value of 10,000 yens consumes 12,500 yens, for example, will be described with reference to Fig. 12 as an example of the inquiry received by the worker terminal 2B.

Like Fig. 8, Fig. 12 illustrates the screen 50a on the worker terminal 2B, and the incentive display area 51 and the inquiry display area 52 are displayed in this screen 50a.

Specifically, in the incentive display area 51 are displayed: the date and time of update of the incentive balance information registered in the incentive balance information DB 24; and the amount of money payable with the incentive the worker has, with "JPN" indicating the currency unit and "10,000.00" representing the value of the incentive.

Also, in the inquiry display area 52, "JPN 12,500.00" is displayed as the amount of money which the worker is to consume, and "JPN 2,500.00" is displayed as the amount of the balance due. Specifically, this means that the incentive can be used to pay 10,000 yens, but is insufficient and 2,500 yens cannot be paid. Also, in the inquiry display area 52 are displayed a sentence "Do you pay the balance due by salary deduction?", and also the "YES" reply button 52a for indicating an intention to accept to pay the balance due by salary deduction, and the "NO" reply button 52b for indicating an intention to not accept to pay the balance due by salary deduction.

After receiving the above-described inquiry, the worker terminal 2B transmits reply information on whether to pay the balance due by salary reduction to the incentive processing device 1A (116c). Specifically, the worker having received this inquiry can transmit the reply information by selecting the "YES" reply button 52a or the "NO" reply button 52b, which are displayed in the inquiry display area 52 in the screen 50 on the worker terminal 2B in Fig. 12. Assume here that the reply button 52a is selected to transmit reply information as an approval to proceed with the payment process by paying the balance due by salary deduction.

The incentive processing device 1A receives the reply information transmitted from the worker terminal 2B (117c).

As a result, the incentive processing device 1A obtains a reply from the worker terminal 2B about whether to pay the balance due by salary deduction.

Then, the incentive processing device 1A refers to the company specification information DB 21 based on the worker ID to extract the company ID, refers to the consumption condition DB 22 based on the extracted company ID to extract the consumption condition, and determines whether the consumption by the worker satisfies the extracted consumption condition (120).

Then, if determining that the consumption by the worker satisfies the extracted consumption condition, the incentive processing device 1A subtracts the value of the to-be-consumed money information from the value of the incentive information to thereby calculate the balance due, and registers this balance due as the balance of the incentive information in the incentive balance information DB 24 (130c).

Thus, with the configuration to issue an inquiry about whether to pay a balance due by salary deduction to the worker terminal 2B when receiving reply information indicating that the balance due is payable from the personnel attendance salary calculation device 3, it is possible to make payment using an incentive even when the upper limit incentive value is exceeded.

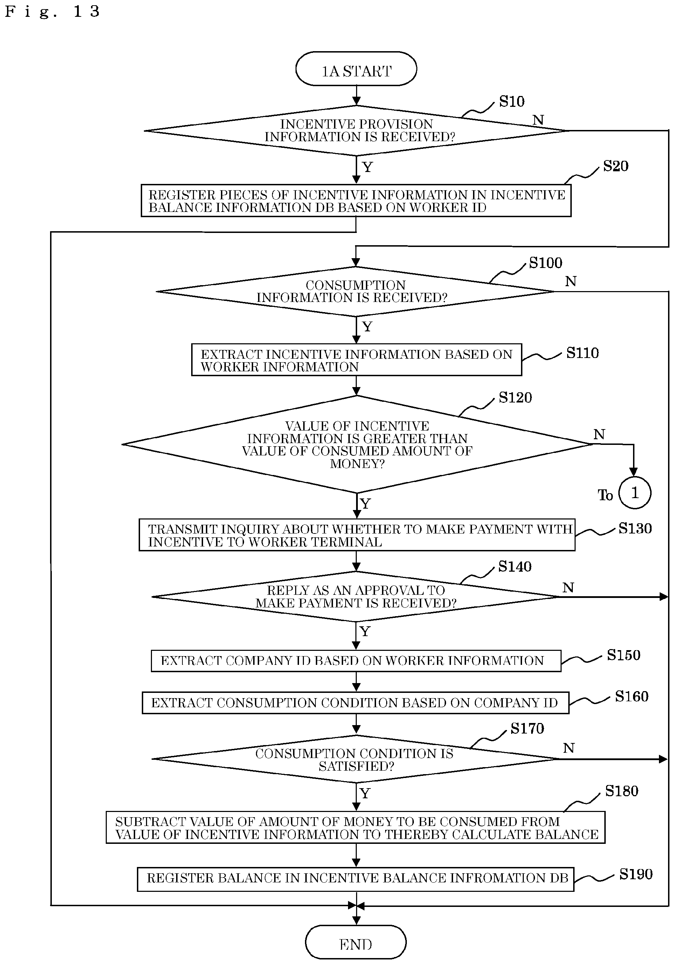

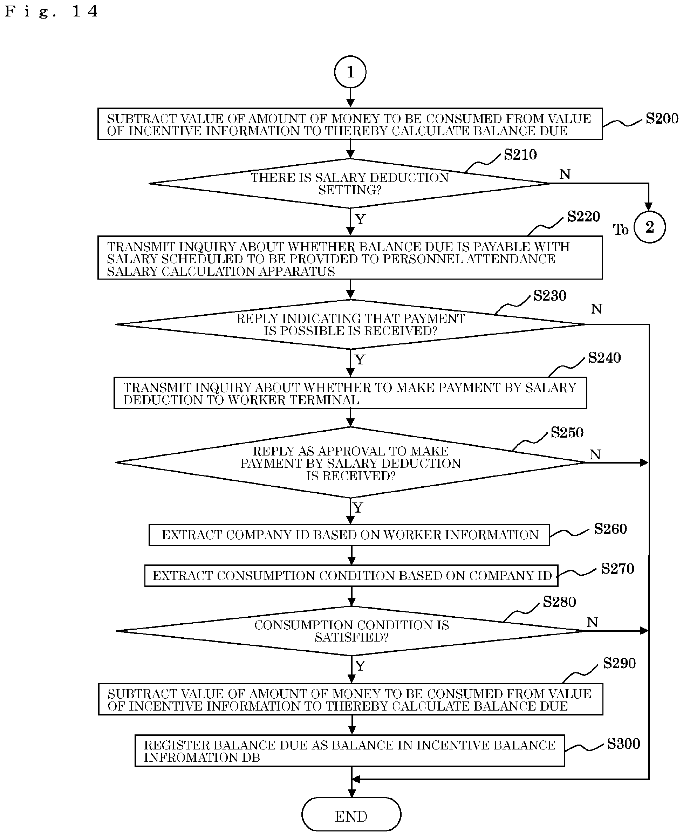

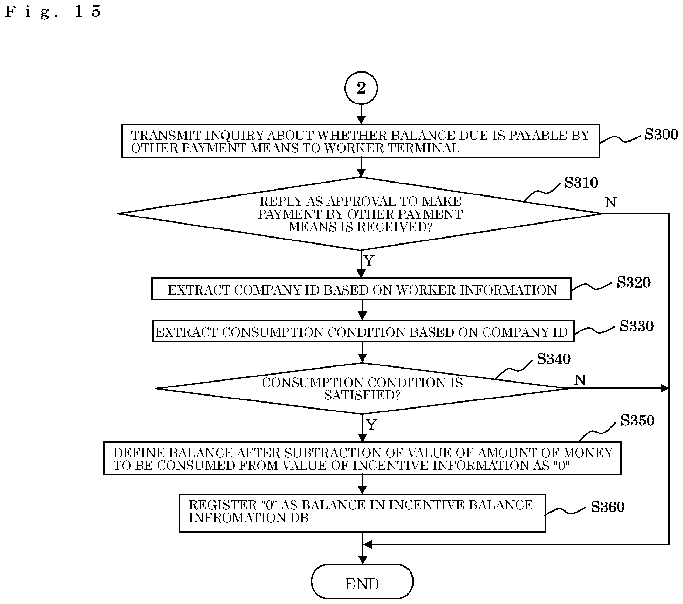

Next, an example of the operation of the incentive processing device 1A for executing the above first method will be described with reference to Figs. 13 to 15.

First, the incentive information registration unit 11 performs a process of determining whether incentive provision information is received which contains at least worker ID identifying workers and pieces of incentive information indicating the values of the incentives provided to the workers (S10).

Then, if the incentive information registration unit 11 receives incentive provision information (Y), the incentive information registration unit 11 thereafter performs a process of registering the pieces of incentive information in association with the worker ID in the incentive balance information DB 24 (S20). In this process, if there are pieces of incentive information with balances registered in the incentive balance information DB 24, the pieces of incentive information contained in the obtained incentive provision information may be registered in place of the balances of the pieces of the incentive information. Alternatively, the pieces of incentive information contained in the obtained incentive provision information may be added to the balances of the pieces of incentive information and the sums may be registered.

Then, the series of operations at the incentive processing device 1A ends.

On the other hand, if the incentive information registration unit 11 determines that incentive provision information has not been received (N), the incentive payment possibility determination unit 12 performs a process of determining whether consumption information is received which contains worker information identifying a worker who is making consumption, to-be-consumed money information specifying the amount of money to be paid by the worker for the consumption, and the consumption destination ID identifying the consumption destination where the consumption is being made (S100).

If the incentive payment possibility determination unit 12 determines that consumption information is received (Y), the incentive payment possibility determination unit 12 then performs a process of referring to the incentive balance information DB 24 and extracting the incentive information registered based on the obtained worker ID (S110).

On the other hand, if the incentive payment possibility determination unit 12 determines that consumption information has not been received (N), the series of operations at the incentive processing device 1A ends.

Further, the incentive payment possibility determination unit 12 performs a process of comparing the extracted incentive information and the to-be-consumed money information contained in the obtained consumption information, and determining whether the value of the incentive information is greater than the value of the to-be-consumed money information (S120).

If the incentive payment possibility determination unit 12 determines the value of the incentive information is greater than or equal to the value of the to-be-consumed money information (Y), the incentive payment possibility determination unit 12 transmits an inquiry notification for checking whether to proceed with a payment process using the incentive to the worker terminal 2B (S130).

After transmitting the inquiry about whether to make the payment with the incentive to the worker terminal 2B, the incentive payment possibility determination unit 12 performs a process of determining whether an approval reply as an indication to proceed with the payment process is received from the worker terminal 2B (S140).

If the incentive payment possibility determination unit 12 receives an approval reply as an indication to proceed with the payment process from the worker terminal 2B (Y), the incentive payment possibility determination unit 12 performs a process of referring to the company specification information DB 21 based on the worker ID to extract the company ID identifying the company providing salary to the worker registered in association with the worker ID (S150).

On the other hand, if the incentive payment possibility determination unit 12 receives a rejection reply as an indication to not proceed with the payment process (that is, if the incentive payment possibility determination unit 12 does not receive an approval reply as an indication to proceed with the payment process) from the worker terminal 2B (N), the series of operations at the incentive processing device 1A ends.

After extracting the company ID, the incentive payment possibility determination unit 12 performs a process of referring to the consumption condition information DB 22 based on the extracted company ID to extract the consumption condition designated by the company registered in association with the extracted company ID for providing an incentive (S160).

Further, the incentive payment possibility determination unit 12 performs a process of referring to the consumption destination information DB 23 based on the received consumption destination ID to identify the consumption destination where the consumption is being made, and determining whether the identified consumption destination satisfies the extracted consumption condition (S170).

If the incentive payment possibility determination unit 12 determines that the consumption condition is satisfied (Y), the incentive payment processing unit 13 performs a process of subtracting the value of the to-be-consumed money information from the value of the incentive information to thereby calculate the balance (S180).

On the other hand, if the incentive payment possibility determination unit 12 determines that consumption condition is not satisfied (N), the series of operations at the incentive processing device 1A ends.

Then, the incentive payment processing unit 13 performs a process of registering the calculated balance of the incentive information in the incentive balance information DB 24 (S190).

This ends the basic series of operations at the incentive processing device 1A.

Meanwhile, there is a case where when the incentive payment possibility determination unit 12 compares the extracted incentive information and the to-be-consumed money information contained in obtained consumption information (S 120), the value of the incentive information is determined to be smaller than the value of the to-be-consumed money information (N). In this case, the incentive payment possibility determination unit 12 further performs a process of subtracting the value of the to-be-consumed money information from the value of the incentive information to thereby calculate the balance due (S200).

Thereafter, the incentive payment possibility determination unit 12 performs a process of determining whether there is a salary deduction setting (S210), as a process to be performed when there is a balance due in the payment process using the incentive.

If the incentive payment possibility determination unit 12 determines that there is a salary deduction setting (Y), the incentive payment possibility determination unit 12 further transmits to the personnel attendance salary calculation device 3 an inquiry containing the worker ID and balance due information indicating the difference between the to-be-consumed money information and the incentive information, and inquiring about whether the balance due is payable by referring to the up-to-date salary scheduled to be provided to the worker (S220).

After transmitting the inquiry to the personnel attendance salary calculation device 3, the incentive payment possibility determination unit 12 performs a process of determining whether a reply indicating that the payment by salary deduction is possible is received from the personnel attendance salary calculation device 3 (S230).

If the incentive payment possibility determination unit 12 receives a reply indicating that the payment by salary deduction is possible from the personnel attendance salary calculation device 3 (Y), the incentive payment possibility determination unit 12 further transmits an inquiry notification for checking whether to approve the payment by salary deduction to the worker terminal 2B (S240).

On the other hand, if the incentive payment possibility determination unit 12 receives a reply indicating that the payment by salary deduction is impossible from the personnel attendance salary calculation device 3 (that is, the incentive payment possibility determination unit 12 does not receive a reply indicating that the payment by salary deduction is possible) (N), the series of operations at the incentive processing device 1A ends.

After transmitting the inquiry about whether to make the payment by salary deduction to the worker terminal 2B, the incentive payment possibility determination unit 12 performs a process of determining whether an approval reply as an indication to make the payment by salary deduction is received from the worker terminal 2B (S250).

If the incentive payment possibility determination unit 12 receives an approval reply as an indication to proceed with the payment process from the worker terminal 2B (Y), the incentive payment possibility determination unit 12 performs a process of referring to the company specification information DB 21 based on the worker ID to extract the company ID identifying the company providing salary to the worker registered in association with the worker ID (S260).

On the other hand, if the incentive payment possibility determination unit 12 receives a rejection reply as an indication to not proceed with the payment process (that is, if the incentive payment possibility determination unit 12 does not receive an approval reply as an indication to proceed with the payment process by salary deduction) from the worker terminal 2B (N), the series of operations at the incentive processing device 1A ends.

After extracting the company ID, the incentive payment possibility determination unit 12 performs a process of referring to the consumption condition information DB 22 based on the extracted company ID to extract the consumption condition designated by the company registered in association with the extracted company ID for providing an incentive (S270).

Further, the incentive payment possibility determination unit 12 performs a process of referring to the consumption destination information DB 23 based on the received consumption destination ID to identify the consumption destination where the consumption is being made, and determining whether the identified consumption destination satisfies the extracted consumption condition (S280).

If the incentive payment possibility determination unit 12 determines that the consumption condition is satisfied (Y), the incentive payment processing unit 13 performs a process of subtracting the value of the to-be-consumed money information from the value of the incentive information to thereby calculate the balance due (S290).

On the other hand, if the incentive payment possibility determination unit 12 determines that consumption condition is not satisfied (N), the series of operations at the incentive processing device 1A ends.

Then, the incentive payment processing unit 13 performs a process of registering the calculated balance due in the incentive information as the balance of the incentive balance information DB 24 (S300).

This ends the series of operations at the incentive processing device 1A.

Meanwhile, there is a case where when the incentive payment possibility determination unit 12 determines whether there is a salary deduction setting (S210), the incentive payment possibility determination unit 12 determines that there is no salary deduction setting (N). In this case, the incentive payment possibility determination unit 12 transmits an inquiry about whether it is possible to pay the balance due by other payment means than an incentive to the worker terminal 2B (S300).

After transmitting the inquiry about whether the payment by other payment means is possible to the worker terminal 2B, the incentive payment possibility determination unit 12 performs a process of determining whether a reply as an approval to make the payment by other payment means is received from the worker terminal 2B (S310).

If the incentive payment possibility determination unit 12 receives an approval reply as an approval to pay the balance due by other payment means and proceed with the payment process from the worker terminal 2B (Y), the incentive payment possibility determination unit 12 performs a process of referring to the company specification information DB 21 based on the worker ID to extract the company ID identifying the company providing salary to the worker registered in association with the worker ID (S320).

On the other hand, if the incentive payment possibility determination unit 12 receives a reply as an indication to not proceed with the payment process (that is, if the incentive payment possibility determination unit 12 does not receive a reply as an approval to pay the balance due by other payment means) from the worker terminal 2B (N), the series of operations at the incentive processing device 1A ends.

After extracting the company ID, the incentive payment possibility determination unit 12 performs a process of referring to the consumption condition information DB 22 based on the extracted company ID to extract the consumption condition designated by the company registered in association with the extracted company ID for providing an incentive (S330).

Further, the incentive payment possibility determination unit 12 performs a process of referring to the consumption destination information DB 23 based on the received consumption destination ID to identify the consumption destination where the consumption is being made, and determining whether the identified consumption destination satisfies the extracted consumption condition (S340).

If the incentive payment possibility determination unit 12 determines that the consumption condition is satisfied (Y), the incentive payment processing unit 13 performs a process of defining the value of subtraction of the value of the to-be-consumed money information from the value of the incentive information as "0" (S350).

On the other hand, if the incentive payment possibility determination unit 12 determines that consumption condition is not satisfied (N), the series of operations at the incentive processing device 1A ends.

Then, the incentive payment processing unit 13 performs a process of registering "0" as the balance in the incentive balance information DB 24 (S360).

This ends the series of operations at the incentive processing device 1A.

As described above, in the present invention, firstly, incentives (allowances) provided by companies to their workers and to be consumed in particular regions and for particular business partners and utilized before particular dates are added to and set as allowance items in the personnel attendance salary calculation device 3 and are transmitted from the personnel attendance salary calculation device 3 to the incentive processing device lAin advance.

Then, a worker visits a store or business partner satisfying a particular condition to shop and presents something that identifies the worker. Here, the something that identifies the worker may be anything, such as a piece of biometric identification, an ID card, or a mobile ID, as long as the worker ID identifying the individual can be read from it.

Thereafter, the store register (payment system) 2A at the store is used to transmit the consumption destination ID identifying the store and also the read worker ID and the amount of money to be consumed to the incentive processing device 1A. Alternatively, the worker terminal 2B is used to read the consumption destination ID identifying the store, enter the amount of money to be consumed, and transmit them along with the worker ID identifying the worker to the incentive processing device 1A.

Then, if the consumption condition designated by the company is satisfied, the incentive processing device 1A permits the payment to be made using the incentive provided by the company.

Thus, based on the balance registered in the incentive balance information DB 24, it is possible to figure out the amount of money the worker consumed for shopping in the particular region and at the particular business partner. This enables the third party running the incentive processing service to prove the amount of money consumed. With this proof, the company can show the specific amount of money to its local community and business partners to show how much the company has contributed. As a result, the company gets appreciated by the local community and business partners and therefore the company value is expected to increase.

Note that the amount of money consumed is paid directly to the store or the like from the company via the incentive of the worker, for example. Specifically, by linking an allowance calculation process by a salary calculation system and payment information, it is possible to provide a system that requires no manual input and therefore does not increase the load of accounting work and salary calculation work.

Also, the amount of money consumed by the worker can be paid by transferring that amount of money directly from the bank account of the company managing the amount of money provided as the salary of the worker calculated by an attendance-salary system or from the electronic wallet of the company to the bank account or electronic wallet of the store or business partner. This brings about an advantage that the worker can utilize the system even if the worker does not have a bank account. In addition, immigrants cannot have a bank account in many cases regardless of whether they are working in a developing country or in a developed country. Thus, there is a great advantage for those workers as well. There is also an advantage for countries that are reducing the amount of transactions using banknotes and cash and promoting digital money payment.

Further, there have been many problems with malicious business owners and entrepreneurs embezzling a subsidy or loan money, using it for bribery, or using it for something irrelevant to their business. However, by having companies contribute to their communities by means of their workers' incentive allowances, it is possible to figure out how much money was paid from which companies through whom to whom. This increases the likelihood of preventing fraudulent use of money.

### <Second Embodiment

Meanwhile, the present invention can be such that workers can check their incentive balances as desired. Specifically, this differs from the above first embodiment in that incentive information can be transmitted to the worker terminal 2B at a desired time such as before consumption, for example.

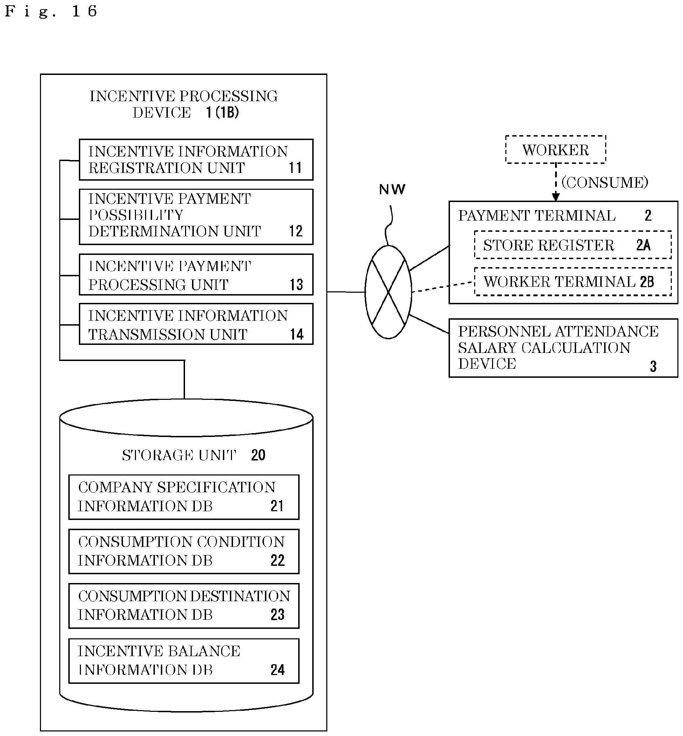

Firstly, Fig. 16 illustrates a configuration of the second incentive processing device 1B of the present invention.

The second incentive processing device 1B of the present invention is configured to be capable of communicating with each of a store register 2A and a worker terminal 2B as payment terminals 2, and a salary calculation device 3 through a network NW

Also, as illustrated in Fig. 16, the second incentive processing device 1B of the present invention includes an incentive information registration unit 11, an incentive payment possibility determination unit 12, an incentive payment processing unit 13, and an incentive information transmission unit 14, and also its storage unit 20 includes a company specification information DB 21, a consumption condition information DB 22, a consumption destination information DB 23, and an incentive balance information DB 24.

The incentive information transmission unit 14 is means for, when a worker ID is received from the worker terminal 2B, referring to the incentive balance information DB 24 and extracting the incentive information registered based on the worker ID, and transmitting the extracted incentive information to the worker terminal 2B. That is, the incentive information transmission unit 14 has a function of, in response to a request from a worker to check the available incentive, transmitting the incentive information to the worker terminal 2B.

Thus, the second incentive processing device 1B is configured to, when obtaining a worker ID, extract the incentive information registered based on the worker ID and transmit the incentive information to the worker terminal 2B. This enables a worker to check the incentive balance when making a purchase or doing the like.

Also, in the second incentive processing device 1B in this embodiment, the incentive information registration unit 11 may obtain, for each worker, consumption destination region information and incentive information set for each consumption destination region as incentive provision information, and store, for each worker, the consumption destination region information and the incentive information in association with each other in the incentive balance information DB 24.

In this case, the incentive information transmission unit 14 in the second incentive processing device 1B has a function of, when a worker ID is obtained, referring to the incentive balance information DB 24, extracting the consumption destination region information and the incentive information registered based on this worker ID, and transmitting the extracted incentive information with the consumption destination region information associated therewith to the worker terminal 2B.

As described above, the configuration is such that companies set incentive information for each of their consumption destination regions (hereinafter referred to as "regional contribution allowance") in the personnel attendance salary calculation device 3, and consumption destination region information and incentive information are stored in association with each other in the incentive balance information DB 24 for each worker. In this way, a worker can check the balance of the incentive, which is the regional contribution allowance, when making a purchase.

Also, the incentive information registration unit 11 in the second incentive processing device 1B in this embodiment may obtain, for each worker, business partner store information and incentive information set for each business partner store as incentive provision information, and store, for each worker, the business partner store information and the incentive information in association with each other in the incentive balance information DB 24.

In this case, the incentive information transmission unit 14 in the second incentive processing device 1B has a function of, when a worker ID is obtained, referring to the incentive balance information DB 24, extracting the business partner store information and the incentive information registered based on this worker ID, and transmitting the extracted incentive information with the business partner store information associated therewith to the worker terminal 2B.

As described above, the configuration is such that companies set incentive information for each of their business partner regions (hereinafter referred to as "business partner support allowance") in the personnel attendance salary calculation device 3, and business partner store information and incentive information are stored in association with each other in the incentive balance information DB 24 for each worker. In this way, a worker can check the balance of the incentive, which is the business partner support allowance, when making a purchase.

Note that the second incentive processing device 1B in this embodiment may store a plurality of pieces of consumption destination region information, store a plurality of pieces of business partner store information, or store both the consumption destination region information and the business partner store information in the incentive balance information DB 24.

Here, the incentive balance information DB 24 in the second incentive processing device 1B stores incentive balance information for each of items such as the consumption destination region information and the business partner store information for each worker.

As illustrated in Fig. 5B, for example, this incentive balance information DB 24 stores an item a1 and its incentive balance information, an item a2 and its incentive balance information, ..., an item b1 and its incentive balance information, an item b2 and its incentive balance information, ... in association with a worker ID.

Also, in the present invention, it is possible not only to identify regions and business partners but also to filter all business partners and companies to a plurality of business offices or a particular business owner. In addition, the present invention can be provided within a company and among group companies.

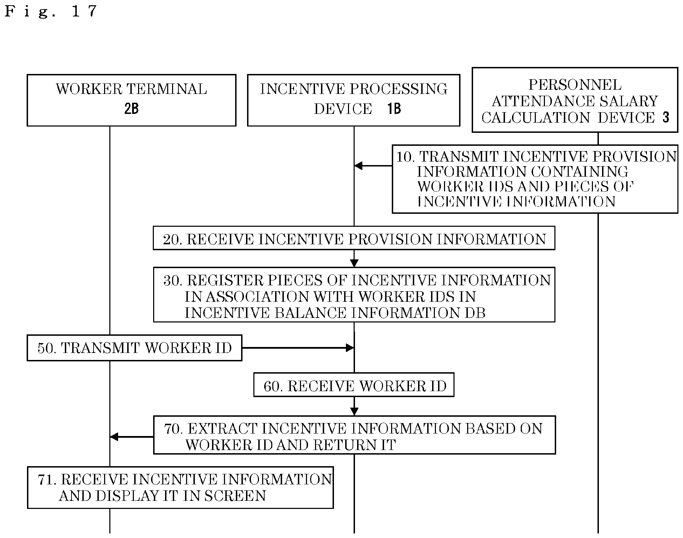

Next, a flow of processing in an incentive processing system for executing an incentive processing method according to the second embodiment of the present invention (hereinafter referred to as "second method") will be described with reference to Fig. 17.

Note that the second incentive processing device 1B of the present invention implements the second method described below by executing a second computer program.

First, processing is performed in a similar manner to the flow of the processing in the above first method up to the point where: the personnel attendance salary calculation device 3 transmits incentive provision information containing worker ID and pieces of incentive information to the incentive processing device 1B in advance (10), and the incentive processing device 1B receives the incentive provision information transmitted from the personnel attendance salary calculation device 3 (20) and registers the incentive provision information in association with the worker ID in the incentive balance information DB 24 (30).

Then, the worker terminal 2B launches the dedicated program for utilizing the incentive processing service to thereby transmit the worker IDuch as mobile phone information identifying the worker to the incentive processing device 1B (50).

The incentive processing device 1B in turn receives the worker ID transmitted from the worker terminal 2B (60).

The incentive processing device 1B refers to the incentive balance information DB 24 based on the received worker ID to extract the balance of the incentive information on the worker registered in association with the received worker ID, and transmits the extracted balance to the worker terminal 2B (70).

The worker terminal 2B in turn receives the incentive information transmitted from the incentive processing device 1B and displays it in a screen (71). The worker then checks the incentive information displayed in the screen on the worker terminal 2B.

The above is a flow in the incentive processing system for executing the second method using the incentive processing device 1B.

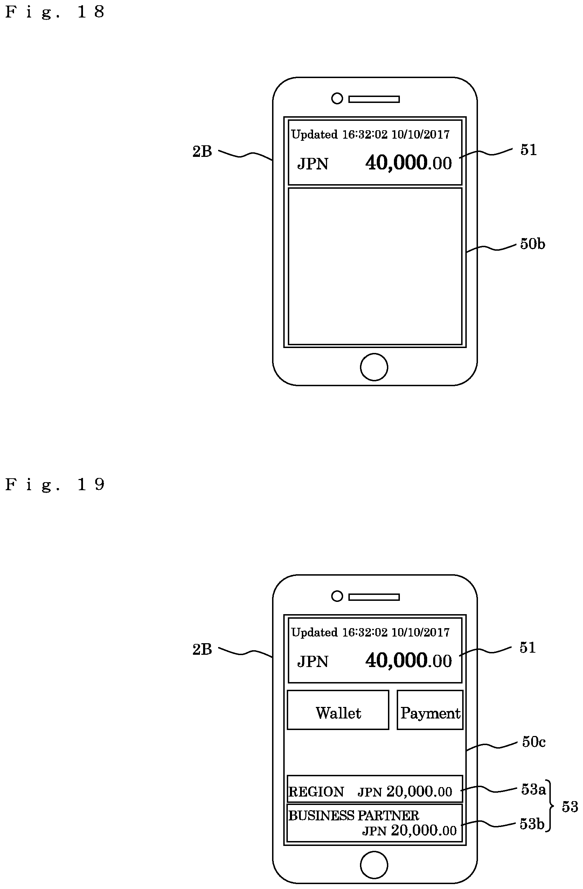

Here, what is illustrated in Fig. 18, for instance, can be an example of the incentive information received by the worker terminal 2B and checked by the worker.

Fig. 18 illustrates a screen 50b on the worker terminal 2B, and this screen 50b is provided with an incentive display area 51.

Specifically, in the incentive display area 51 are displayed: the date and time of update of the incentive balance information registered in the incentive balance information DB 24; a country name "JPN" indicating the currency unit; and "40,000.00" representing the value of the incentive. Thus, the worker has an incentive equivalent to a currency value of 40,000 yens.

Meanwhile, what is illustrated in Fig. 19, for instance, can be an example of the incentive information checked by the worker in the case where the incentive information registered in the incentive balance information DB 24 is associated with a plurality of items such as consumption destination region information and business partner store information.

Fig. 19 illustrates a screen 50c on the worker terminal 2B, and this screen 50c is provided with the incentive display area 51 and an itemized incentive display area 53 describing details of the pieces of incentive information.

Specifically, in the incentive display area 51 are displayed: the date and time of update of the incentive balance information registered in the incentive balance information DB 24; a country name "JPN" indicating the currency unit; and "40,000.00" representing the value of the incentive.

Also, in the itemized incentive display area 53 are provided a regional contribution allowance display area 53a as a first item and a business partner support allowance display area 53b as a second item. Further, in the regional contribution allowance display area 53a are displayed characters (or a mark) "Region" and "JPN 20,000.00" indicating that the worker has an incentive of a currency value equivalent to 20,000 yens. In the business partner support allowance display area 53b is displayed characters (or a mark) "Business Partner" and "JPN 20,000.00" indicating that the worker has an incentive of a currency value equivalent to 20,000 yens.

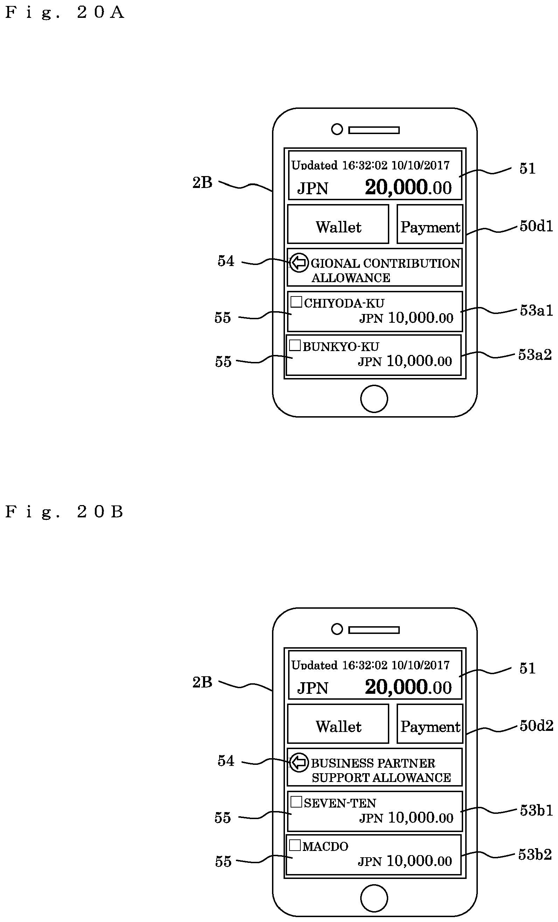

Meanwhile, what is illustrated in Fig. 20, for instance, can be examples of the incentive information checked by the worker in the case where the incentive information registered in the incentive balance information DB 24 is associated with a plurality of pieces of consumption destination region information and a plurality of pieces of business partner store information.

Fig. 20A illustrates a screen 50d1 displayed when the regional contribution allowance display area 53a illustrated in Fig. 19 is selected. This screen 50d1 is provided with the incentive display area 51 and a first region display area 53a1 and a second region display area 53a2 describing details of a plurality of pieces of incentive information registered in association with the regional contribution allowance, which is a first item.

Specifically, in the incentive display area 51 are displayed: the date and time of update of the incentive balance information registered in the incentive balance information DB 24 in association with the regional contribution allowance; a country name "JPN" indicating the currency unit; and "20,000.00" representing the value of the incentive.

Also, displayed in the first region display area 53a1 are characters "Chiyoda-ku" and "JPN 10,000.00" indicating that the worker has an incentive of a currency value equivalent to 10,000 yens. Displayed in the second region display area 53a2 are characters "Bunkyo-ku" and "JPN 10,000.00" indicating that the worker has an incentive of a currency value equivalent to 10,000 yens.

Note that this screen 50d1 is provided with a back button 54 for going back to the previous screen 50c, and checkboxes 55 and 55 respectively indicating whether or not the incentives associated with the Chiyoda-ku indicated in the first region display area 53a1 and the Bunkyo-ku indicated in the second region display area 53a2 are selected to be used.

Thus, if the worker wishes to make payment by using a regional contribution allowance, the worker does it as below, for example.

First, the worker selects the regional contribution allowance display area 53a in the screen 50c illustrated in Fig. 19. As a result, the screen 50d1 illustrated in Fig. 20A is displayed. Further, if the worker wishes to make the payment with the regional contribution allowance that can be used only in Chiyoda-ku the worker selects the first region display area 53a1 in the screen 50d1 illustrated in Fig. 20A.

As a result, the checkbox 55 provided in the first region display area 53a1 is checked. Further, the worker selects the first region display area 53a1 in the screen 50d1 illustrated in Fig. 20A again. As a result, an optical symbol not illustrated is generated which contains the worker ID, and the information on the incentive (balance) provided to be used only in Chiyoda-ku. Then, as will be described later, the worker has this optical symbol read by the store register 2A installed at a store present in Chiyoda-ku to thereby make the payment using the incentive (regional contribution allowance) that can be used only in Chiyoda-ku.

Alternatively, if the worker wishes to make the payment with the regional contribution allowance that can be used only in Bunkyo-ku on the screen 50d1 illustrated in Fig. 20A, the worker selects the second region display area 53a2 in the screen 50d1 illustrated in Fig. 20A.

As a result, the checkbox 55 provided in the second region display area 53a2 is checked. Further, the worker selects the second region display area 53a2 in the screen 50d1 illustrated in Fig. 20A again. As a result, an optical symbol not illustrated is generated which contains the worker ID, and the information on the incentive (balance) provided to be used only in Bunkyo-ku. Then, the worker has this optical symbol read by the store register 2A installed at a store present in Bunkyo-ku to thereby make the payment using the incentive (regional contribution allowance) that can be used only in Bunkyo-ku.

Fig. 20B, on the other hand, illustrates a screen 50d2 displayed when the business partner support allowance display area 53b illustrated in Fig. 19 is selected. This screen 50d2 is provided with the incentive display area 51, and a first business partner display area 53b1 and a second business partner display area 53b2 describing details of a plurality of pieces of incentive information registered in association with the business partner support allowance, which is a second item.

Specifically, in the incentive display area 51 are displayed: the date and time of update of the incentive balance information registered in the incentive balance information DB 24 in association with the business partner support allowance; a country name "JPN" indicating the currency unit; and "20,000.00" representing the value of the incentive.

Also, displayed in the first business partner display area 53b1 are characters "7-Ten" and "JPN 10,000.00" indicating that the worker has an incentive of a currency value equivalent to 10,000 yens. Displayed in the second business partner display area 53b2 are characters "MacDo" and "JPN 10,000.00" indicating that the worker has an incentive of a currency value equivalent to 10,000 yens.

Note that this screen 50d2 is also provided with a back button 54 for going back to the previous screen 50c, and checkboxes 55 and 55 respectively indicating whether or not the incentives associated with the 7-Ten indicated in the first business partner display area 53b1 and the MacDo indicated in the second business partner display area 53b2 are selected to be used.

Thus, if the worker wishes to make payment by using a business partner support allowance, the worker does it as below, for example.

First, the worker selects the business partner support allowance display area 53b in the screen 50c illustrated in Fig. 19. As a result, the screen 50d2 illustrated in Fig. 20B is displayed. Further, if the worker wishes to make the payment with the business partner support allowance that can be used only at 7-Tens, the worker selects the first business partner display area 53b1 in the screen 50d2 illustrated in Fig. 20B.

As a result, the checkbox 55 provided in the first business partner display area 53b1 is checked. Further, the worker selects the first business partner display area 53b1 in the screen 50d2 illustrated in Fig. 20B again. As a result, an optical symbol not illustrated is generated which contains the worker ID, and the information on the incentive (balance) provided to be used only at 7-Tens. Then, as will be described later, the worker has this optical symbol read by the store register 2A installed at a 7-Ten to thereby make the payment using the incentive (business partner support allowance) that can be used only at 7-Tens.

Alternatively, if the worker wishes to make the payment with the business partner support allowance that can be used only at MacDos on the screen 50d2 illustrated in Fig. 20B, the worker selects the second business partner display area 53b2 in the screen 50d2 illustrated in Fig. 20B.

As a result, the checkbox 55 provided in the second business partner display area 53b2 is checked. Further, the worker selects the second business partner display area 53b2 in the screen 50d2 illustrated in Fig. 20B again. As a result, an optical symbol not illustrated is generated which contains the worker ID, and the information on the incentive (balance) provided to be used only at MacDos. Then, the worker has this optical symbol read by the store register 2A installed at a MacDo to thereby make the payment using the incentive (business partner support allowance) that can be used only at MacDos.

Thus, when the worker makes payment by using the store register 2A as the payment terminal 2, the store register 2A calculates the amount of money to be consumed (the amount of money to be paid), and the worker then selects an item corresponding to the incentive to be utilized for the payment on the worker's mobile terminal (worker terminal 2B) as described above. As a result, an optical symbol containing the worker ID and incentive item information is generated. The worker has this optical symbol read by the store register 2A. Then, the store register 2A transmits the calculated to-be-consumed money information, the obtained worker ID and incentive item information, and also the consumption destination IDtored in the store register 2A to the incentive processing device 1B.In this way, the payment can be made using the incentive provided by the company.

Alternatively, when the worker makes payment by using the store register 2A as the payment terminal 2, the store register 2A calculates the amount of money to be consumed (the amount of money to be paid), and then the worker reads an optical symbol displayed at the store with the worker's worker terminal 2B, and selects an item corresponding to the incentive to be utilized for the payment as described above. As a result, an optical symbol containing the worker ID, incentive item information, and the consumption destination ID is generated. The worker has this optical symbol read by the store register 2A. Then, the store register 2A transmits the calculated to-be-consumed money information and the obtained worker ID, incentive item information, and consumption destination ID to the incentive processing device 1B. The payment may be made in this way using the incentive provided by the company.

Further, when the worker makes payment by using the worker terminal 2B as the payment terminal 2, the worker reads an optical symbol displayed at the store with the worker terminal 2B to thereby obtain the consumption destination ID and, on the worker terminal 2B, enters the amount of money to be consumed and further selects an item corresponding to the incentive to be utilized for the payment as described above. Then, the worker terminal 2B transmits the obtained consumption destination ID, the entered to-be-consumed money information, the selected incentive item information, and the worker IDtored in the worker terminal 2B to the incentive processing device 1B. The payment may be made in this way using the incentive provided by the company.

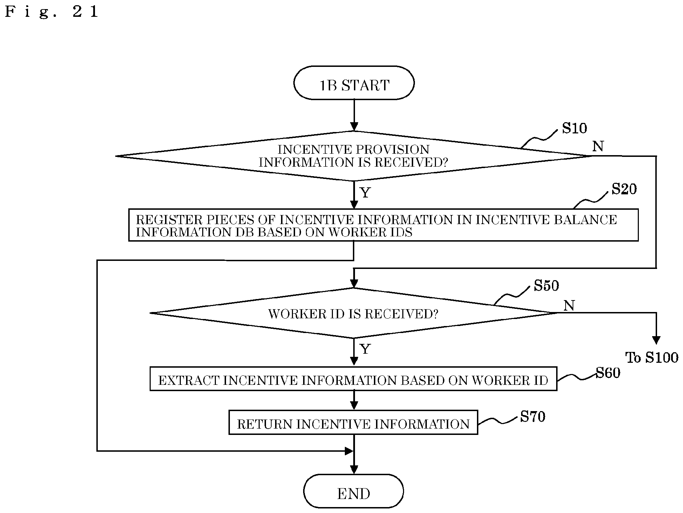

Next, an example of the operation of the incentive processing device 1B for executing the above second method will be described with reference to Fig. 21.

First, the incentive information registration unit 11 performs a process of determining whether incentive provision information is received which contains at least worker ID identifying workers and pieces of incentive information indicating the values of the incentives provided to the workers (S10).

Then, if the incentive information registration unit 11 receives incentive provision information (Y), the incentive information registration unit 11 thereafter performs a process of registering the pieces of incentive information in association with the worker ID in the incentive balance information DB 24 (S20).

Then, the series of operations at the incentive processing device 1B ends.

On the other hand, if the incentive information registration unit 11 determines that incentive provision information has not been received (N), the incentive information transmission unit 14 performs a process of determining whether a worker ID identifying a worker is received from the worker terminal 2B (S50).

If the incentive information transmission unit 14 determines that a worker ID is received (Y), the incentive information transmission unit 14 then performs a process of referring to the incentive balance information DB 24 based on the worker ID to extract the incentive information on the worker registered in association with the worker ID (S60).

On the other hand, if the incentive information transmission unit 14 determines that a worker ID has not been received (N), the incentive payment possibility determination unit 12 performs a process of determining whether consumption information containing a worker ID, to-be-consumed money information, and a consumption destination ID is received (S100).

Then, after extracting the incentive information registered in association with the worker ID, the incentive information transmission unit 14 performs a process of transmitting the extracted incentive information to the worker terminal 2B (S70).

Then, the series of operations at the incentive processing device 1B ends.

### <Third Embodiment

Meanwhile, the present invention can be such that the completion of payment can be checked with the store register 2A and the worker terminal 2B. Specifically, this differs from the above first embodiment in that a payment completion notification is transmitted to the store register 2A and the worker terminal 2B after payment is completed.

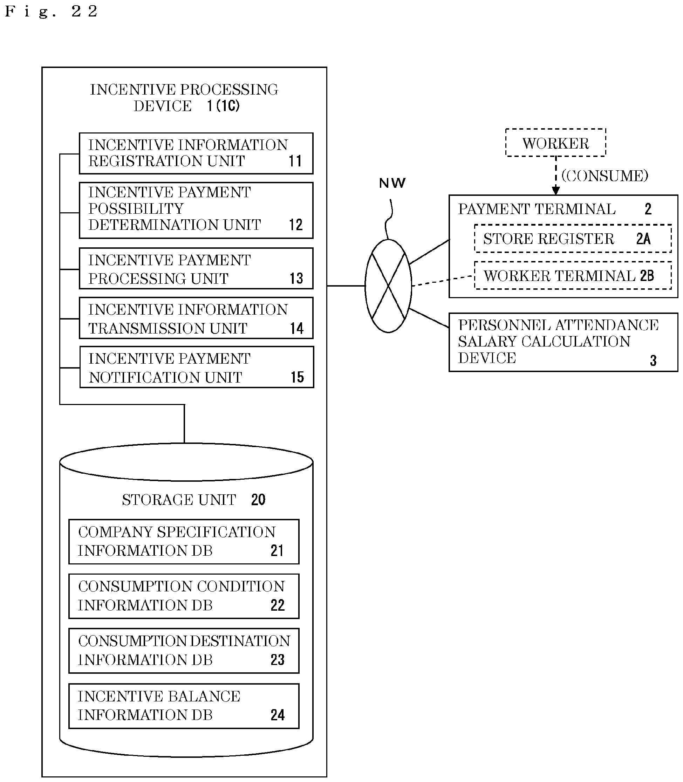

Firstly, Fig. 22 illustrates a configuration of the third incentive processing device 1C of the present invention.

The third incentive processing device 1C of the present invention is configured to be capable of communicating with each of a payment terminal 2A (2B) and a salary calculation device 3 through a network NW

Also, as illustrated in Fig. 22, the third incentive processing device 1C of the present invention includes an incentive information registration unit 11, an incentive payment possibility determination unit 12, an incentive payment processing unit 13, an incentive information transmission unit 14, and an incentive payment notification unit 15, and also its storage unit 20 includes a company specification information DB 21, a consumption condition information DB 22, a consumption destination information DB 23, and an incentive balance information DB 24.

The incentive payment notification unit 15 is means for transmitting a payment completion notification as a notification of completion of payment using an incentive to the payment terminal 2A (2B) after the incentive payment processing unit 13 calculates the balance of the incentive information.

With this configuration to transmit a payment completion notification to the payment terminal 2A (2B) after calculating the balance of the incentive information in response to payment of the amount of money to be consumed, the cashier at the store register and the worker can figure out that the payment has been properly completed.

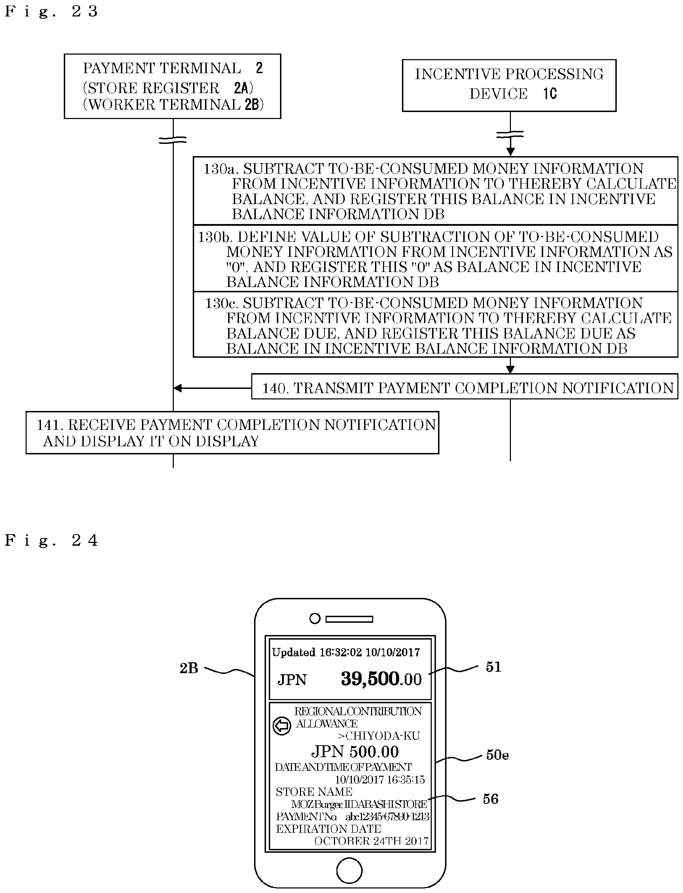

Next, a flow of processing in an incentive processing system for executing an incentive processing method according to the third embodiment of the present invention (hereinafter referred to as "third method") will be described with reference to Fig. 23.

Note that the third incentive processing device 1C of the present invention implements the third method described below by executing a third computer program.

First, the third incentive processing device 1C performs processing in a similar manner to the flow of the processing in the above first method up to the point where: when the incentive information received in response to consumption by a worker is greater than or equal to the value of the to-be-consumed money information, the to-be-consumed money information is subtracted from the incentive information to thereby calculate the balance and the balance of the incentive information is registered in the incentive balance information DB 24 (130a); when the incentive information received in response to the consumption by the worker is smaller than the value of the to-be-consumed money information, the value of subtraction of the to-be-consumed money information from the incentive information is defined as "0" and this "0" is registered as the balance in the incentive balance information DB 24 (130b); or when the incentive information received in response to the consumption by the worker is smaller than the value of the to-be-consumed money information, the to-be-consumed money information is subtracted from the incentive information to thereby calculate the balance due and this balance due is registered as the balance in the incentive balance information DB 24 (130c).

Thereafter, the third incentive processing device 1C transmits a payment completion notification to the payment terminal 2A (2B) (140).

The payment terminal 2A (2B) in turn receives the payment completion notification transmitted from the incentive processing device 1C and displays it in a screen (141). Then, using the store register 2A and the worker terminal 2B, the cashier at the store register and the worker check the payment completion notification displayed in respective screens.

The above is a flow in the incentive processing system for executing the third method using the incentive processing device 1C.

Here, a case where a worker having an incentive equivalent to a currency value of 40,000 yens has consumed 500 yens, for example, will be described with reference to Fig. 24 as an example of the payment completion notification received by the worker terminal 2B and checked by the worker.

Fig. 24 illustrates a screen 50e on the worker terminal 2B, and an incentive display area 51 and a detail display area 56 are displayed in this screen 50e.

Specifically, in the incentive display area 51 are displayed: the date and time of update of the incentive balance information registered in the incentive balance information DB 24; a country name "JPN" indicating the currency unit; and "39,500.00" representing the value of the incentive. Thus, having consumed 500 yens, the worker has an incentive equivalent to a currency value of 39,500 yens.

Also, in the detail display area 56 are displayed: "JPN 500.00" as the amount of money consumed this time; "10/10/2017 16:35:15" as the date and time of payment of the consumed amount of money; "MOZ Burger, IIDABASHI STORE" as the name of the store where the consumption was made; "abcl2345-67890-1213" as a payment number; and "OCTOBER 24TH 2017" as the expiration date before which the incentive can be used to make payment. Note that the information described in the detail display area 56 may be any items as long as their contents indicate that payment has been properly made using an incentive.

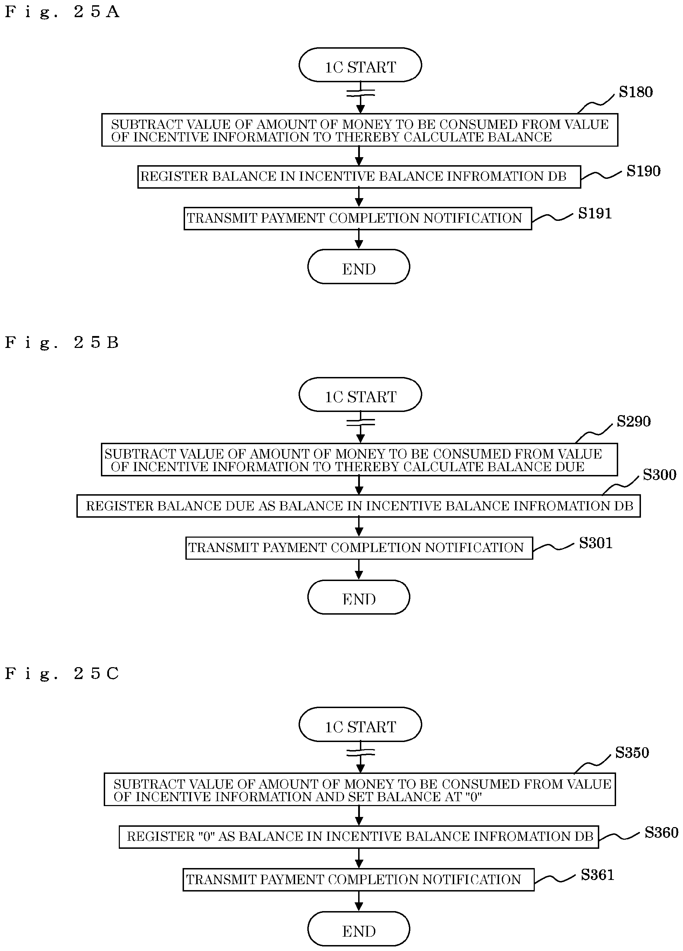

Next, examples of the operation of the incentive processing device 1C for executing the above third method will be described with reference to Fig. 25.

First, Fig. 25A is an example of the operation in a case where the incentive information received in response to consumption by a worker is greater than or equal to the value of the to-be-consumed money information. The operation up to the process in which, when the value of the incentive information is greater than or equal to the value of the to-be-consumed money information, the incentive payment processing unit 13 subtracts the to-be-consumed money information from the incentive information to thereby calculate the balance (S180) and registers the calculated balance of the incentive information in the incentive balance information DB 24 (S190) is performed in a similar manner to the example of the operation of the first incentive processing device 1A for executing the above first method, and description thereof is therefore omitted.

In the incentive processing device 1C, after the incentive payment processing unit 13 registers the balance in the incentive balance information DB 24, the incentive payment notification unit 15 performs a process of transmitting a payment completion notification as a notification of completion of the payment using the incentive to the payment terminal 2A (2B) (S191).

Then, the series of operations at the incentive processing device 1C ends.

Fig. 25B is an example of the operation in a case where the incentive information received in response to consumption by the worker is smaller than the value of the to-be-consumed money information. The operation up to the process in which, when the value of the incentive information is smaller than the value of the to-be-consumed money information, the incentive payment processing unit 13 subtracts the to-be-consumed money information from the incentive information to thereby calculate the balance due (S290) and registers the calculated balance due as the balance in the incentive balance information DB 24 (S300) is performed in a similar manner to the example of the operation of the first incentive processing device 1A for executing the above first method, and description thereof is therefore omitted.

In the incentive processing device 1C, after the incentive payment processing unit 13 registers the balance due as the balance in the incentive balance information DB 24, the incentive payment notification unit 15 performs a process of transmitting a payment completion notification as a notification of completion of the payment using the incentive to the payment terminal 2A (2B) (S301).

Then, the series of operations at the incentive processing device 1C ends.

Fig. 25C is also an example of the operation in a case where the incentive information received in response to consumption by the worker is smaller than the value of the to-be-consumed money information. The operation up to the process in which, when the value of the incentive information is smaller than the value of the to-be-consumed money information, the incentive payment processing unit 13 defines the value of subtraction of the to-be-consumed money information from the incentive information as "0" (S350) and registers this "0" as the balance in the incentive balance information DB 24 (S360) is performed in a similar manner to the example of the operation of the first incentive processing device 1A for executing the above first method, and description thereof is therefore omitted.

In the incentive processing device 1C, after the incentive payment processing unit 13 registers "0" as the balance in the incentive balance information DB 24, the incentive payment notification unit 15 performs a process of transmitting a payment completion notification as a notification of completion of the payment using the incentive to the payment terminal 2A (2B) (S361).

Then, the series of operations at the incentive processing device 1C ends.

### <Fourth Embodiment>

Meanwhile, the present invention can be such that each company can check its workers' status of consumption using their incentives. Specifically, this differs from the above first embodiment in that an incentive balance notification is transmitted to the personnel attendance salary calculation device 3 at predetermined time intervals.

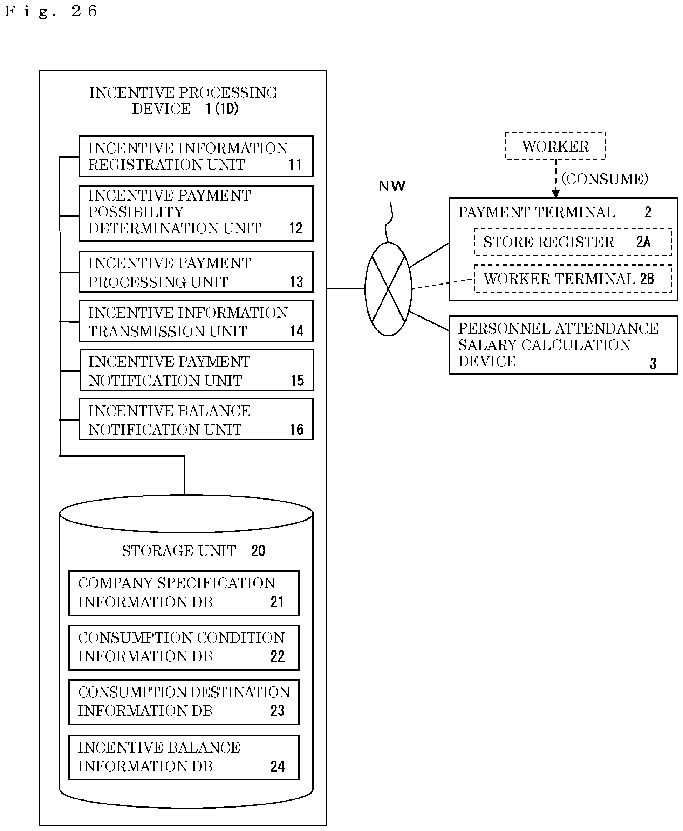

Firstly, Fig. 26 illustrates a configuration of the fourth incentive processing device 1D of the present invention.

The fourth incentive processing device 1D of the present invention is configured to be capable of communicating with each of payment terminals 2 (2A, 2B) and a salary calculation device 3 through a network NW

Also, as illustrated in Fig. 26, the fourth incentive processing device 1D of the present invention includes an incentive information registration unit 11, an incentive payment possibility determination unit 12, an incentive payment processing unit 13, an incentive information transmission unit 14, an incentive payment notification unit 15, and an incentive balance notification unit 16, and also its storage unit 20 includes a company specification information DB 21, a consumption condition information DB 22, a consumption destination information DB 23, and an incentive balance information DB 24.

The incentive balance notification unit 16 is means for transmitting the balance of the incentive information on each worker stored in the incentive balance information DB 24 to the personnel attendance salary calculation device 3 at predetermined time intervals.

With this configuration to transmit incentive balance notification to the personnel attendance salary calculation device 3 at predetermined time intervals, each company can figure out whether its workers have used their incentives effectively.

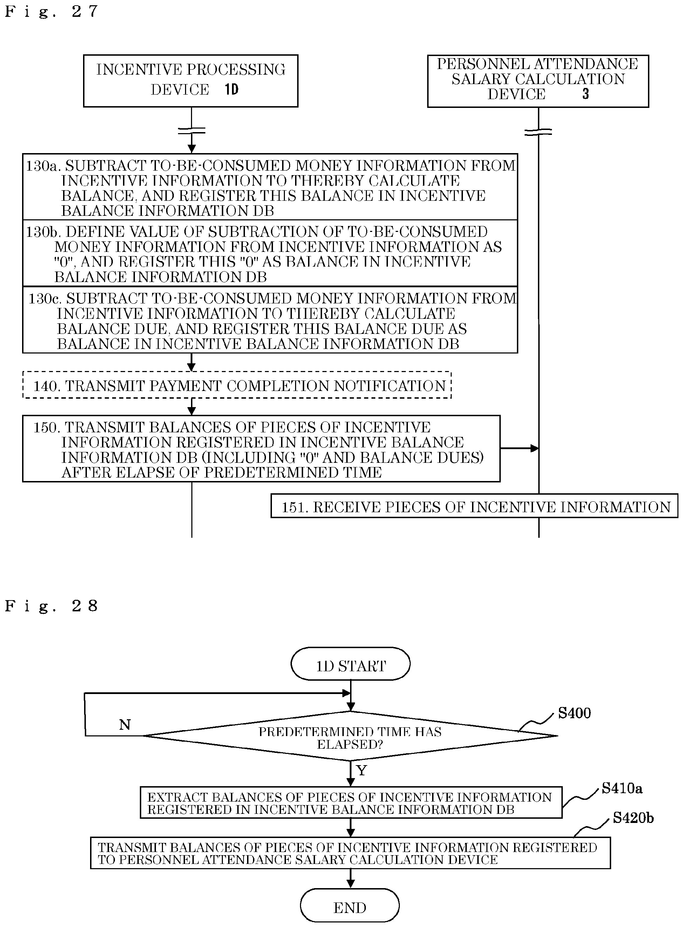

Next, a flow of processing in an incentive processing system for executing an incentive processing method according to the fourth embodiment of the present invention (hereinafter referred to as "fourth method") will be described with reference to Fig. 27.

Note that the fourth incentive processing device 1D of the present invention implements the fourth method described below by executing a fourth computer program.

First, the fourth incentive processing device 1D performs processing in a similar manner to the flow of the processing in the above first method up to the point where: when the incentive information received in response to consumption by a worker is greater than or equal to the value of the to-be-consumed money information, the to-be-consumed money information is subtracted from the incentive information to thereby calculate the balance and the balance of the incentive information is registered in the incentive balance information DB 24 (130a); when the incentive information received in response to the consumption by the worker is smaller than the value of the to-be-consumed money information, the value of subtraction of the to-be-consumed money information from the incentive information is defined as "0" and this "0" is registered as the balance in the incentive balance information DB 24 (130b); or when the incentive information received in response to the consumption by the worker is smaller than the value of the to-be-consumed money information, the to-be-consumed money information is subtracted from the incentive information to thereby calculate the balance due and this balance due is registered as the balance in the incentive balance information DB 24 (130c).

Then, upon elapse of a predetermined time, the fourth incentive processing device 1D extracts the balances of the pieces of incentive information registered in the incentive balance information DB 24 (including "0" and balance dues), and transmits the pieces of balance information of the pieces of incentive information with the respective worker ID associated therewith to the personnel attendance salary calculation device 3 (150).

The personnel attendance salary calculation device 3 in turn receives the worker ID and the pieces of incentive information transmitted from the incentive processing device 1D (151).

The above is a flow in the incentive processing system for executing the fourth method using the incentive processing device 1D.

Next, an example of the operation of the incentive processing device 1D for executing the above fourth method will be described with reference to Fig. 28.

Firstly, the incentive balance notification unit 16 performs a process of determining whether the predetermined time has elapsed (S400).

If the incentive balance notification unit 16 determines that the predetermined time has elapsed (Y), the incentive balance notification unit 16 then performs a process of extracting the balances of the pieces of incentive information registered in the incentive balance information DB 24 (including "0" and balance dues) (S410a).

On the other hand, if the incentive balance notification unit 16 determines that the predetermined time has not elapsed (N), the incentive balance notification unit 16 repeats the process of determining whether the predetermined time has elapsed (S400).

Also, the incentive balance notification unit 16 performs a process of transmitting the extracted balances of the pieces of incentive information with the respective worker ID associated therewith to the personnel attendance salary calculation device 3 (S420a).

Then, the series of operations at the incentive processing device 1D ends.

### <Fifth Embodiment>

Meanwhile, the present invention can be such that each company can check consumed money information on each consumption destination. Specifically, this differs from the above first embodiment in that incentive payment information is transmitted to the personnel attendance salary calculation device 3 at predetermined time intervals.

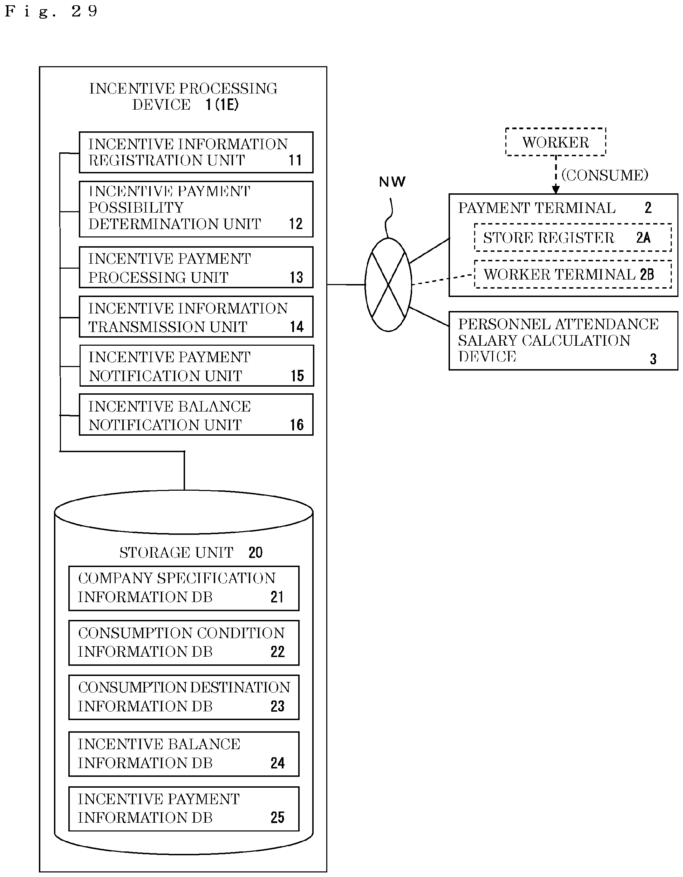

Firstly, Fig. 29 illustrates a configuration of the fifth incentive processing device 1E of the present invention.

The fifth incentive processing device 1E of the present invention is configured to be capable of communicating with each of a payment terminal 2A (2B) and a salary calculation device 3 through a network NW

Also, as illustrated in Fig. 29, the fifth incentive processing device 1E of the present invention includes an incentive information registration unit 11, an incentive payment possibility determination unit 12, an incentive payment processing unit 13, an incentive information transmission unit 14, an incentive payment notification unit 15, and an incentive balance notification unit 16, and also its storage unit 20 includes a company specification information DB 21, a consumption condition information DB 22, a consumption destination information DB 23, an incentive balance information DB 24, and incentive payment information storage means (hereinafter abbreviated as "incentive payment information DB") 25.

The incentive payment information DB 25 is means for storing worker ID, consumption destination ID, pieces of consumed money information on payments with incentives made with the incentive payment processing unit 13 in association with each other. This incentive payment information DB 25 can be configured by, for example, associating worker information tables and transaction information tables each storing transaction information such as the date and time when consumption was made, the store where the consumption was made, the amount of money consumed, and the individual who made the consumption.

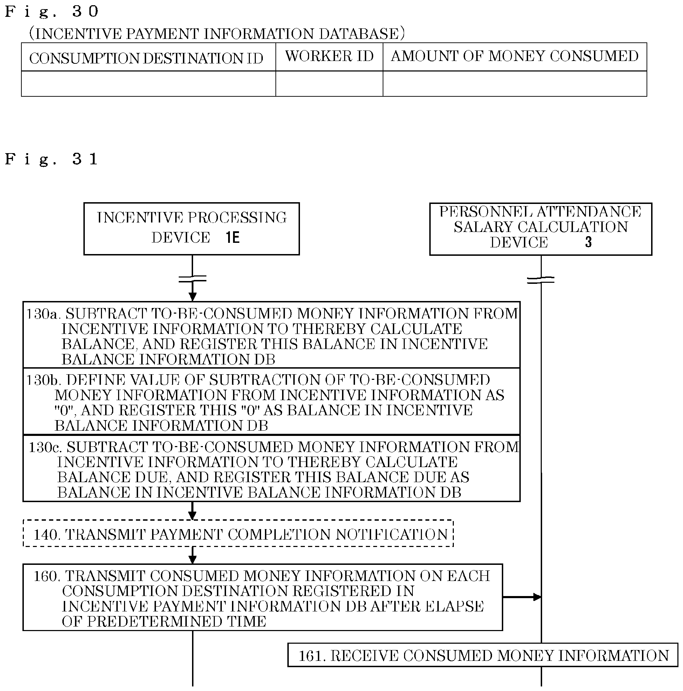

This incentive payment information DB 25 stores worker ID and pieces of consumed money information in association with consumption destination ID as illustrated in Fig. 30, for example.

In the fifth incentive processing device 1E of the present invention, the incentive balance notification unit 16 is means for transmitting the consumed money information on each consumption destination stored in the incentive payment information DB 25 to the personnel attendance salary calculation device 3 at predetermined time intervals.

Next, a flow of processing in an incentive processing system for executing an incentive processing method according to the fifth embodiment of the present invention (hereinafter referred to as "fifth method") will be described with reference to Fig. 31.

Note that the fifth incentive processing device 1E of the present invention implements the fifth method described below by executing a fifth computer program.

First, the fifth incentive processing device 1E performs processing in a similar manner to the flow of the processing in the above first method up to the point where: when the incentive information received in response to consumption by a worker is greater than or equal to the value of the to-be-consumed money information, the to-be-consumed money information is subtracted from the incentive information to thereby calculate the balance and the balance of the incentive information is registered in the incentive balance information DB 24 (130a); when the incentive information received in response to the consumption by the worker is smaller than the value of the to-be-consumed money information, the value of subtraction of the to-be-consumed money information from the incentive information is defined as "0" and this "0" is registered as the balance in the incentive balance information DB 24 (130b); or when the incentive information received in response to the consumption by the worker is smaller than the value of the to-be-consumed money information, the to-be-consumed money information is subtracted from the incentive information to thereby calculate the balance due and this balance due is registered as the balance in the incentive balance information DB 24 (130c).

Then, upon elapse of a predetermined time, the fifth incentive processing device 1E extracts the consumed money information on each worker for each consumption destination registered in the incentive payment information DB 25, and transmits the consumed money information with the corresponding worker ID associated therewith for each consumption destination to the personnel attendance salary calculation device 3 (160).

The personnel attendance salary calculation device 3 in turn receives the consumed money information associated with the worker ID for each consumption destination transmitted from the incentive processing device 1E (161).

The above is a flow in the incentive processing system for executing the fifth method using the incentive processing device 1E.

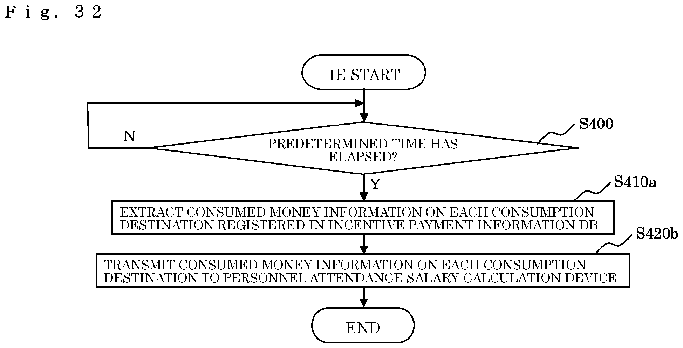

Next, an example of the operation of the incentive processing device 1E for executing the above fifth method will be described with reference to Fig. 32.

Firstly, the incentive balance notification unit 16 performs a process of determining whether the predetermined time has elapsed (S400).

If the incentive balance notification unit 16 determines that the predetermined time has elapsed (Y), the incentive balance notification unit 16 then performs a process of extracting the consumed money information on each worker for each consumption destination registered in the incentive payment information DB 25 (S410b).

On the other hand, if the incentive balance notification unit 16 determines that the predetermined time has not elapsed (N), the incentive balance notification unit 16 repeats the process of determining whether the predetermined time has elapsed (S400).

Also, the incentive balance notification unit 16 performs a process of transmitting the extracted consumed money information for each consumption destination to the personnel attendance salary calculation device 3 (S420b).

Then, the series of operations at the incentive processing device 1E ends.

Note that in the incentive processing device IE, the incentive balance notification unit 16 may perform a process of extracting the consumed money information on each worker for each consumption destination registered in the incentive payment information DB 25 and also extracting the balance of the corresponding incentive information registered in the incentive balance information DB 24 (including "0" and balance dues), and then transmitting the extracted consumed money information on the worker for each consumption destination and the extracted balance of the balance information together to the personnel attendance salary calculation device 3.

Also, in the present invention, the personnel attendance salary calculation device 3 may have a function of performing digital payment processing in which: the amount of salary of each worker is converted into electronic money information and managed in a virtual account; an amount of money specified based on the consumed money information contained in incentive payment information (the consumed money information on the worker for each consumption destination) transmitted from the incentive processing device 1 is subtracted from the balance in the worker's account specified based on the incentive payment information; and that consumed amount of money is transferred to the corresponding consumption destination identified based on the incentive payment information.

With this configuration to transmit incentive payment information to the personnel attendance salary calculation device at predetermined time intervals, each company can objectively prove the amount of money with which the company has made regional contribution or supported its business partner via consumption by its workers.

### < Sixth Embodiment>

In the present application, the details have been described using the terms "company" and "employee" as described above, for the sake of understanding the invention. However, this company is a person who provides incentives to employees, while an employee is a person who receives incentives from the company.

Therefore, from the perspective of those who provide incentives, the company of the present invention is a national or local government agency (hereinafter referred to as a "payer") that provides incentives such as subsidies, loans, and benefits to companies and individuals.). In addition, from the viewpoint of a person who receives the incentive, the employee of the present invention can be rephrased as a company or an individual who receives the incentive from the national or local administrative organization (hereinafter, referred to as "recipient").

Then, the incentive processing apparatus according to the present invention is an apparatus for performing the payment process using the incentive to be paid to the recipient when the recipient performs consumption determined by the recipient. The incentive processing device is configured to be able to communicate via a network to a payment terminal used when a recipient performs payment for consumption. The incentive processing device is configured to be able to communicate via a network to a payer terminal for setting an incentive to be provided to the recipient based on the application information of the recipient. And it can be understood that the present incentive processing apparatus is characterized by having at least the following means. The incentive processing device according to the present invention includes a supplier identification information storage unit that stores information for identifying a recipient and information for identifying a supplier who provides an incentive to the recipient in association with each other. The incentive processing apparatus according to the present invention includes a consumption condition information storage unit that stores information for identifying a payer and consumption conditions determined by the payer in order to settle from the incentive in association with each other. The incentive processing apparatus according to the present invention includes a consumer information storage unit that stores information for identifying a consumer and consumer related information such as the name and address of the consumer in association with each other. An incentive processing device according to the present invention includes an incentive balance information storage unit that stores information for identifying a recipient and a balance of incentive information to be supplied to the recipient by the payer in association with each other. An incentive processing device according to the present invention includes an incentive information registration unit that acquires incentive payment information from a payer terminal. The incentive payment information includes at least information for identifying a recipient and incentive information indicating a value of an incentive to be paid for each recipient. The incentive information registration means registers the incentive information included in the incentive payment information in the incentive balance information storage means in association with information for identifying a recipient. An incentive processing device according to the present invention includes an incentive payment possibility determination unit that acquires consumption information from a payment terminal. This consumption information includes information for specifying the recipient who has consumed, information for specifying the amount of money consumed by the recipient, and information for specifying the consumer who has consumed. The incentive payment possibility determination unit refers to the payer identification information storage unit after acquiring the consumption information. Then, information for specifying the payer who provides the incentive to the receiver is extracted based on the acquired information for identifying the receiver. Further, the incentive payment possibility determination unit refers to the consumption condition information storage unit after extracting the information specifying the payer. Then, based on the extracted information for identifying the payer, a consumption condition determined for the payer to provide the incentive is extracted. Further, the incentive payment possibility determination unit refers to the consumer information storage unit and specifies the consumer where the consumption has been performed based on the acquired information for identifying the consumer. Then, the incentive payment possibility determination means determines whether the specified consumer satisfies the extracted consumption condition. An incentive processing device according to the present invention includes an incentive payment processing unit. The incentive payment processing means continuously refers to the incentive balance information storage unit when the incentive payment possibility determination means determines that the consumption condition is satisfied. Then, the incentive payment processing means extracts the registered incentive information based on the information specifying the recipient included in the obtained consumption information. The incentive payment processing means subsequently compares the extracted incentive information with the information of the consumed amount included in the acquired consumption information. When the incentive payment processing means determines that the value of the incentive information is large or equal, the incentive payment processing means obtains the balance by subtracting the value of the consumed amount information from the value of the incentive information. Then, the incentive payment processing means registers this balance in the incentive balance information storage means.

At this time, the incentive payment possibility determination means refers to the incentive balance information storage means before extracting the information for identifying the payer based on the information for identifying the payee included in the acquired consumption information. Then, the incentive payment possibility determination unit extracts registered incentive information based on the information identifying the recipient included in the acquired consumption information.

Subsequently, the incentive payment possibility determination means compares the extracted incentive information with information on the amount of money consumed included in the acquired consumption information. When the incentive payment possibility determination unit determines that the value of the incentive information is large or equal, the incentive payment possibility determination unit transmits an inquiry notification to the recipient terminal to confirm whether to continue the payment process. Further, the incentive payment possibility determination means extracts information for identifying the payer and consumption conditions when receiving an acknowledgment from the receiver terminal that the payment processing is to be continued. Then, the incentive payment possibility determination means may determine the consumer and determine whether the consumption condition is satisfied.

When the payment terminal is a device installed in a store where the recipient consumes, the payment terminal is configured to be able to communicate with a recipient terminal used by the recipient via a network.

Further, in the incentive processing system according to the present invention, when the recipient performs consumption determined by the payer, payment processing is performed using the incentive provided by the payer. In this system, an incentive processing device, a payment terminal used for performing consumption payment, and a supplier terminal for setting an incentive based on application information of a recipient are configured to be communicable via a network. The incentive processing device executes a process of settingtle the consumption amount consumed by the recipient from the incentive paid by the payer.

The payer terminal transmits to the incentive processing device, incentive payment information including at least information for identifying a receiver and information indicating an incentive value to be provided for each receiver.
The payment terminal transmits, to the incentive processing device, information for specifying the recipient who has consumed information for specifying the amount of money consumed by the recipient, and information for specifying the consumer who has consumed.

The incentive processing device includes a payer identification information storage unit that stores information for identifying a recipient and information for identifying a payer who provides an incentive to the recipient in association with each other. The incentive processing apparatus according to the present invention includes a consumption condition information storage unit that stores information for identifying a payer and consumption conditions determined by the payer in order to settle from the incentive in association with each other.

The incentive processing apparatus according to the present invention includes a consumer information storage unit that stores information for identifying a consumer and consumer related information such as the name and address of the consumer in association with each other. An incentive processing device according to the present invention includes an incentive balance information storage unit that stores information for identifying a recipient and a balance of incentive information to be supplied to the recipient by the payer in association with each other.

An incentive processing device according to the present invention includes an incentive information registration unit that acquires incentive payment information from a payer terminal. The incentive payment information includes at least information for identifying a recipient and incentive information indicating a value of an incentive to be paid for each recipient. The incentive information registration means registers the incentive information included in the incentive payment information in the incentive balance information storage means in association with the information for identifying the recipient.

An incentive processing device according to the present invention includes an incentive payment possibility determination unit that acquires consumption information from a payment terminal. This consumption information includes information for specifying the recipient who has consumed, information for specifying the amount of money consumed by the recipient, and information for specifying the destination of consumption. After acquiring the consumption information, the incentive payment possibility determination unit refers to the payer identification information storage unit. Then, based on the acquired information for identifying the recipient, the incentive payment possibility determination means extracts information for identifying the recipient who provides the incentive to the recipient.

Further, the incentive payment possibility determination unit refers to the consumption condition information storage unit after extracting the information specifying the payer. Subsequently, the incentive payment possibility determination means extracts consumption conditions determined for the incentive to be paid by the payer based on the extracted information for identifying the payer. Also, the incentive payment possibility determination unit refers to the consumer information storage unit. Further, the incentive payment possibility determination means specifies the consumer who has consumed the product based on the acquired information for identifying the consumer. Then, the incentive payment possibility determination means determines whether the specified consumer satisfies the extracted consumption condition.

The incentive processing device according to the present invention further includes an incentive payment processing unit that refers to the incentive balance information storage unit when the incentive payment possibility determination unit determines that the consumption condition is satisfied. The incentive payment processing means extracts registered incentive information based on information for identifying a recipient included in the acquired consumption information. The incentive payment processing means subsequently compares the extracted incentive information with the information of the consumed amount included in the acquired consumption information. When the incentive payment processing means determines that the value of the incentive information is large or equal, the incentive payment processing means obtains the balance by subtracting the value of the consumed amount information from the value of the incentive information. Then, the incentive payment processing means registers this balance in the incentive balance information storage means.

At this time, the incentive processing device refers to the incentive balance information storage unit before extracting the information for identifying the payer based on the information for identifying the receiver included in the acquired consumption information. Further, the incentive processing device extracts registered incentive information based on information for identifying a recipient included in the acquired consumption information.
Subsequently, in the incentive processing device, the incentive payment possibility determination unit compares the extracted incentive information with the information of the consumed amount included in the acquired consumption information. When the incentive processing device determines that the value of the incentive information is large or equal, the incentive processing device transmits an inquiry notification to the recipient terminal to confirm whether to continue the payment process.

Further, in the incentive processing device, when the incentive payment possibility determination means receives an acknowledgment from the recipient terminal that the payment process is to be continued, the incentive processing device extracts information for identifying the payer and extracts consumption conditions.. Then, in the incentive processing device, the incentive payment possibility determination means may determine the consumer and determine whether or not the consumption condition is satisfied.

Further, the incentive processing method according to the present invention is a method in which, when the recipient performs consumption determined by the payer, the payer performs a payment process using the incentive paid to the recipient. In this method, the incentive processing device is configured to be able to communicate via a network to a payment terminal used for payment of consumption and a supplier terminal for setting an incentive to be paid based on application information of the recipient. This incentive processing device executes the following processing.

The incentive processing device includes a payer identification information storage unit that stores information for identifying a recipient and information for identifying a payer who provides an incentive to the recipient in association with each other. Further, the incentive processing device includes a consumption condition information storage unit that stores information for identifying the payer and consumption conditions determined by the payer in order to settle from the incentive in association with each other. Further, the incentive processing device includes a consumer information storage unit that stores information for identifying the consumer and consumer related information such as the name and address of the consumer in association with each other. Further, the incentive processing device includes an incentive balance information storage unit that stores information for identifying a recipient and a balance of incentive information to be supplied to the recipient by the payer in association with each other.

The incentive processing device executes a process of acquiring incentive payment information from a payer terminal. The incentive payment information includes at least information for identifying a recipient and information indicating an incentive value to be supplied for each recipient. Further, the incentive processing device executes a process of registering the incentive information in the incentive balance information storage means in association with the information for identifying the recipient. Further, the incentive processing device executes a process of acquiring consumption information from the payment terminal. This consumption information includes information for specifying the recipient who has consumed, information for specifying the amount of money consumed by the recipient, and information for specifying the consumer who has consumed. Further, the incentive processing device executes a process of referring to the payer specifying information storage unit. Subsequently, the incentive processing device executes a process of extracting information for identifying a payer who provides an incentive to the recipient based on the acquired information for identifying the recipient. Further, the incentive processing device refers to the consumption condition information storage means. Subsequently, the incentive processing device executes a process of extracting a consumption condition determined for the incentive to be paid by the payer based on the extracted information for identifying the payer. The incentive processing device refers to the consumer information storage unit. Subsequently, the incentive processing device executes a process of specifying the consumer who has consumed the product based on the acquired information for identifying the consumer. In addition, the incentive processing device executes a process of determining whether or not the identified consumption destination satisfies the extracted consumption condition. When the incentive processing device determines that the consumption condition is satisfied, the incentive processing device continuously refers to the incentive balance information storage unit. Subsequently, the incentive processing device executes a process of extracting registered incentive information based on information for identifying a recipient included in the obtained consumption information. Further, the incentive processing device compares the extracted incentive information with the information of the consumed amount included in the acquired consumption information. When the incentive processing device determines that the value of the incentive information is large or equal, the incentive processing device executes a process of subtracting the value of the consumption amount information from the value of the incentive information to obtain a balance. Thereafter, the incentive processing device executes a process of registering the balance in the incentive balance information storage means.

At this time, the incentive processing device refers to the incentive balance information storage unit before executing the process of extracting the information for identifying the payer based on the information for identifying the payee included in the acquired consumption information. Then, the incentive processing device executes a process of extracting registered incentive information based on information for identifying a recipient included in the obtained consumption information. Subsequently, the incentive processing device compares the extracted incentive information with the information of the consumed amount included in the acquired consumption information. When the incentive processing device determines that the value of the incentive information is large or equal, the incentive processing device executes a process of transmitting an inquiry notification for confirming whether to continue the payment process to the recipient terminal. Further, when receiving an acknowledgment from the recipient terminal that the payment process is to be continued, the incentive processing device performs a process of extracting information for identifying the payer and extracting a consumption condition. Then, the incentive processing device executes a process of identifying the consumer and determining whether or not the consumption condition is satisfied.

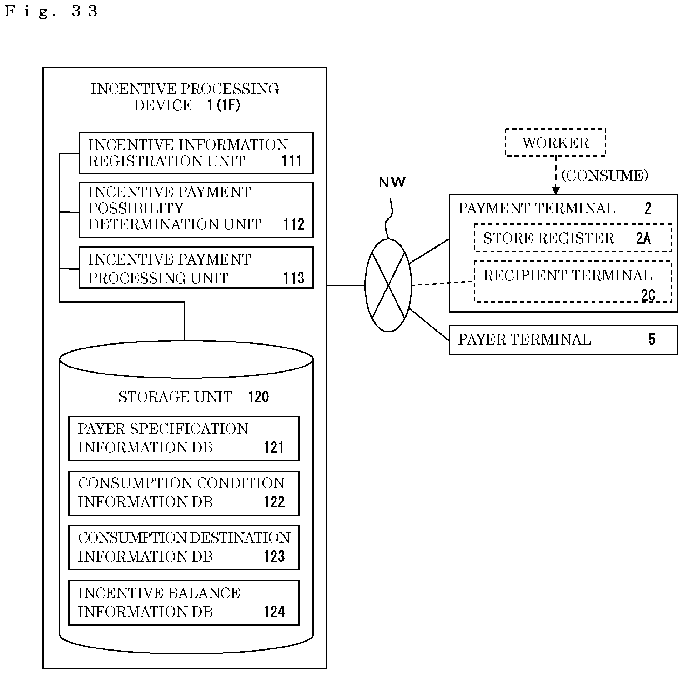

That is, as shown in FIG. 33, the sixth incentive processing device IF according to the present invention is configured to be able to communicate with the payment terminal 2 and the payer terminal 5 via the network NW

The payment terminal 2 is a device used when the recipient performs payment for consumption. The payment terminal 2 refers to, for example, a mobile terminal (hereinafter simply referred to as a "recipient terminal") 2C having a network function owned by the recipient, in addition to the store register 2A installed in the store. The payment terminals 2A and 2C are realized by incorporating the dedicated programs described above.

The recipient terminal 2C is a portable device such as a smartphone having an optical symbol reading function such as a camera and a numeric input function such as a keyboard, similarly to the worker terminal 2B described above. The recipient terminal 2C provides the incentive processing device IF with the payer specification, the consumption amount information, and the consumer ID.

Therefore, in order for a portable terminal such as a smartphone to function as the recipient terminal 2C, the recipient needs to obtain the dedicated program by a predetermined procedure as described above, in advance. Upon receiving and reading the optical symbol, the recipient terminal 2C into which the dedicated program is installed decodes the consumer ID and the like recorded in the optical symbol. In addition, recipient terminal 2C receives the input of the consumption amount. Thereafter, the recipient terminal 2C extracts the recipient information stored in the predetermined storage area and the address (URL) on the network for accessing the incentive processing device IF. Then, the recipient terminal 2C transmits the consumer ID, the consumption amount information, and the recipient information to the extracted URL.

The payer terminal 5 is a device that sets an incentive to be provided to the recipient based on the application information of the recipient. That is, the payer terminal 5 is installed in a country or a local administrative organization that provides incentives called subsidies, loans, and benefits to companies and individuals. The payer terminal 5 sets an incentive for which payment is determined based on the application information of the recipient, and transmits the information to the incentive processing apparatus IF.

Further, the sixth incentive processing device IF is basically configured to include at least the incentive information registration unit 111, the incentive payment possibility determination unit 112, the incentive payment processing unit 113, and the storage unit 120. In addition, the storage unit 120 is configured to include at least a payer identification information database (Hereinafter abbreviated as "payer specification information DB") 121, a consumption condition information DB 122, a consumption destination information DB 123, and an incentive balance information DB 124.

The payer specification information DB 121 is a unit that stores, for each recipient, the payer specification so that the payer who provides the incentive to the recipient can be identified. That is, the payer specification information DB 121 can be configured by associating the recipient information table with the payer specification table. The recipient information table stores, for example, personal information such as a recipient ID, a recipient number, a recipient name, a recipient address, a recipient telephone number, and a recipient mail address. The payer specification table stores, for example, payer-related information such as the name and address of the payer.

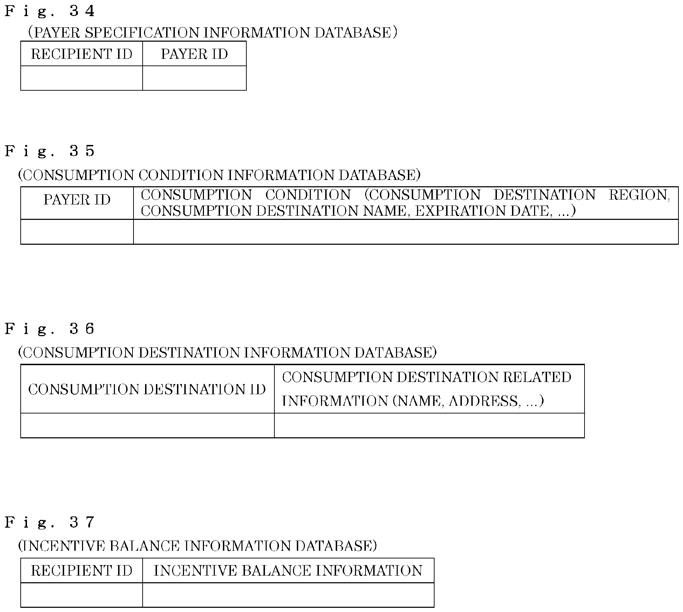

The recipient information table is used for identifying the recipient by storing the stored personal information alone or by combining a plurality of them. As shown in FIG.34, for example, this payer specification information DB 121 stores information for identifying a supplier (Hereinafter, referred to as "payer ID") in association with a recipient ID for identifying a consumer who consumes.

The consumption condition information DB 122 is a means for storing, for each payer, consumption conditions determined by the payer in order to settle from an incentive paid to the payee. That is, the consumption condition information DB 122 stores arbitrary consumption conditions such as the name and address of the consumer, the name of the store, the item for consumption, and the expiration date. The consumption condition can be freely set and registered by the supplier by connecting to the incentive processing apparatus IF using a communication terminal such as the supplier terminal 5 that can transmit and receive via the network.

The consumption condition may be one or plural. Further, when a plurality of consumption conditions are set, "and" setting intended to satisfy all of the plurality of consumption conditions can be performed. Further, when a plurality of consumption conditions are set, "or" setting may be performed, which means that at least one of the plurality of consumption conditions should be satisfied. The consumption condition information DB 122 stores the consumption condition in association with the payer ID as shown in FIG.35, for example.

Like the consumer information DB 23, the consumption destination information DB 123 is a unit that stores consumer information such as a consumer name, an address, and a product item for each consumer. The consumption destination information DB 123 stores the consumer information in association with a consumer ID for identifying a consumer as shown in FIG.36, for example.

The incentive balance information DB 124 is means for storing, for each recipient, balance information of incentives provided by the payer. That is, similarly to the incentive balance information DB 24, the incentive balance information DB 124 stores money information corresponding to the money value. The money information stored in the incentive balance information DB 124 is to be appropriately rewritten by the payment using the incentive by the recipient. The incentive balance information DB 124 stores the incentive balance information in association with the recipient ID as shown in FIG.37, for example.

The incentive information registration unit 111 is a unit that acquires incentive payment information from the payer terminal 5 and registers the incentive information in the incentive balance information DB 124 in association with the recipient ID. The incentive payment information includes at least a recipient ID and incentive information indicating an incentive value to be supplied to each recipient.

The incentive payment possibility determination unit 112 acquires, from the payment terminals 2A and 2C, information for specifying the consumer, information for specifying the amount of consumption, and a consumer ID for specifying the store that has consumed. The incentive payment possibility determination unit 112 further determines whether the consumption of the recipient satisfies a consumption condition suitable for payment using the incentive.

That is, the incentive payment possibility determination unit 112 refers to the payer specification information DB 121 after acquiring the consumption information including the recipient ID, the consumption amount information, and the consumer ID. Then, based on the recipient ID included in the acquired consumption information, incentive payment possibility determination section 112 extracts a payer ID that specifies a payer who provides the incentive to the recipient.

Further, the incentive payment possibility determination unit 112 continues to refer to the consumption condition information DB 122 after extracting the payer ID. Then, the incentive payment possibility determination unit 112 extracts a consumption condition determined for the incentive to be provided by the payer based on the extracted payer ID.

Further, the incentive payment possibility determination unit 112 refers to the consumption destination information DB 123, and identifies the consumer who has consumed based on the acquired consumer ID. Thereafter, the incentive payment possibility determination unit 112 determines whether the identified consumer satisfies the extracted consumption condition.

The incentive payment processing unit 113 is a unit that registers the balance of the incentive information in the incentive balance information DB 124 after the payment is performed using the incentive provided by the payer.

That is, when the incentive payment possibility determination unit 112 determines that the consumption condition is satisfied, the incentive payment processing unit 113 subtracts the consumption amount information from the incentive information to obtain a balance, and registers the balance in the incentive balance information DB 124.

Next, a flow of processing in an incentive processing system for implementing the incentive processing method (Hereafter referred to as the "sixth method") according to the sixth embodiment of the present invention will be described with reference to FIG. In the sixth incentive processing apparatus IF of the present invention, a sixth method described below is realized by executing a sixth computer program.

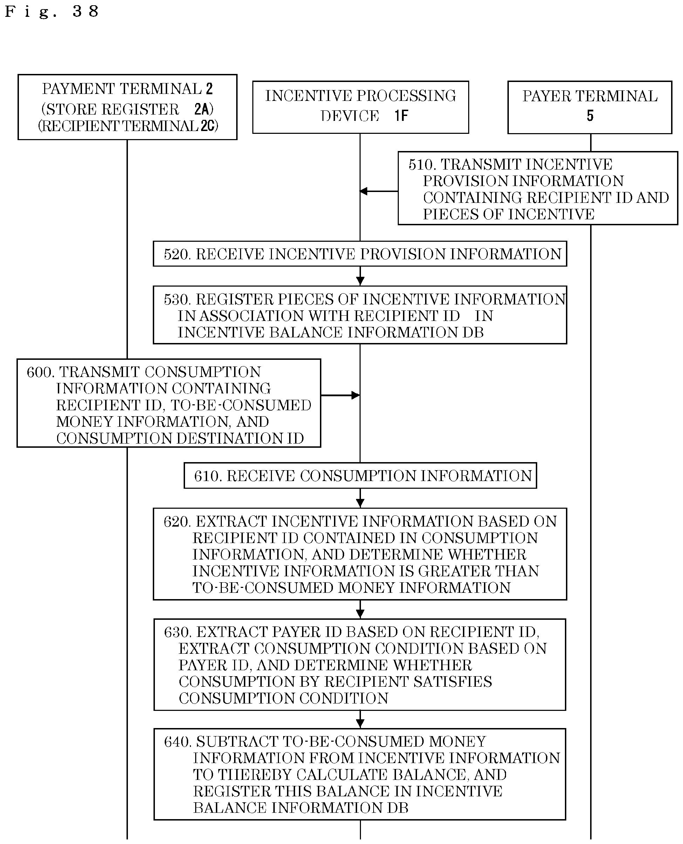

First, as shown in FIG.38, the payer terminal 5 transmits incentive payment information including the receiver ID and the incentive information to the incentive processing apparatus IF in advance (510).

Then, the incentive processing device IF receives the incentive payment information transmitted from the payer terminal 5 (520), and registers the incentive payment information in the incentive balance information DB 24 in association with the recipient ID (530).

Thereafter, the payment terminal 2A (2C) transmits consumption information to the incentive processing device IF according to the consumption of the recipient (600). The consumption information includes information for specifying the recipient who has consumed the consumption, information for specifying the amount of consumption, and a consumer ID for specifying the store where the consumption has been performed.

Then, the incentive processing device IF receives the consumption information transmitted from the payment terminal 2A (2C) (610).

Here, transmission of the recipient information, the consumption amount information, and the consumer ID to the incentive processing apparatus IF can be performed, for example, as follows.

First, when performing payment using the store register 2A as the payment terminal 2, the store cash register 2A calculates a consumption amount (payment price), and then acquires recipient information by a card reader / writer or the like. Then, the store register 2A transmits the consumption IDtored in the store register 2A together with the calculated consumption amount information and the acquired recipient information to the incentive processing apparatus IF.

In the case where the store register 2A is used as the payment terminal 2, payment is performed by the store register 2A, and then the portable terminal of the recipient reads the optical symbol displayed at the store. An optical symbol that includes the consumer ID and the recipient information that the recipient has is generated.

Then, the store register 2A reads the optical symbol generated by the portable terminal of the recipient. The store register 2A may transmit the read recipient information and the consumer ID together with the calculated consumption amount information to the incentive processing apparatus IF.

On the other hand, when making payment by using the recipient terminal 2C as the payment terminal 2, the recipient terminal 2C reads the optical symbol displayed at the store and acquires the consumer IDubsequently, the recipient terminal 2C inputs the consumption amount. Then, the recipient terminal 2C transmits the recipient information stored in the recipient terminal 2C together with the acquired consumer ID and the input consumption amount information to the incentive processing device 1G.

In the incentive processing apparatus IF, based on the recipient ID included in the consumption information, the incentive balance information DB 124 is referenced to extract the incentive balance information registered in association. Further, the incentive processing device IF determines whether or not the balance information of the incentive is larger than the consumption amount information included in the consumption information (620).

Subsequently, when the incentive processing apparatus IF determines that the value of the incentive information is larger or equal to the value of the consumption amount information, the incentive processing device IF refers to the payer specification information DB 121 based on the received recipient ID. Then, the incentive processing apparatus IF extracts a payer ID that specifies a payer who provides an incentive to the payee registered in association with the payee ID. In addition, the incentive processing device IF refers to the consumption condition DB 122 and extracts consumption conditions determined for payment from incentives registered in association with the extracted payer ID. Further, the incentive processing device IF refers to the consumption destination information DB 123 based on the received consumer ID, and specifies the associated consumer information registered in association. Then, the incentive processing device IF determines whether or not the recipient's consumption satisfies the extracted consumption condition based on the specified consumer information (630).

In the incentive processing apparatus IF, payment using the incentive is permitted, and the value of the consumption amount information is subtracted from the value of the incentive information to obtain the balance. Then, the incentive processing device IF registers this balance in the incentive balance information DB 124 (640).

The above is the basic processing flow in the incentive processing system for implementing the sixth method using the present incentive processing apparatus IF.

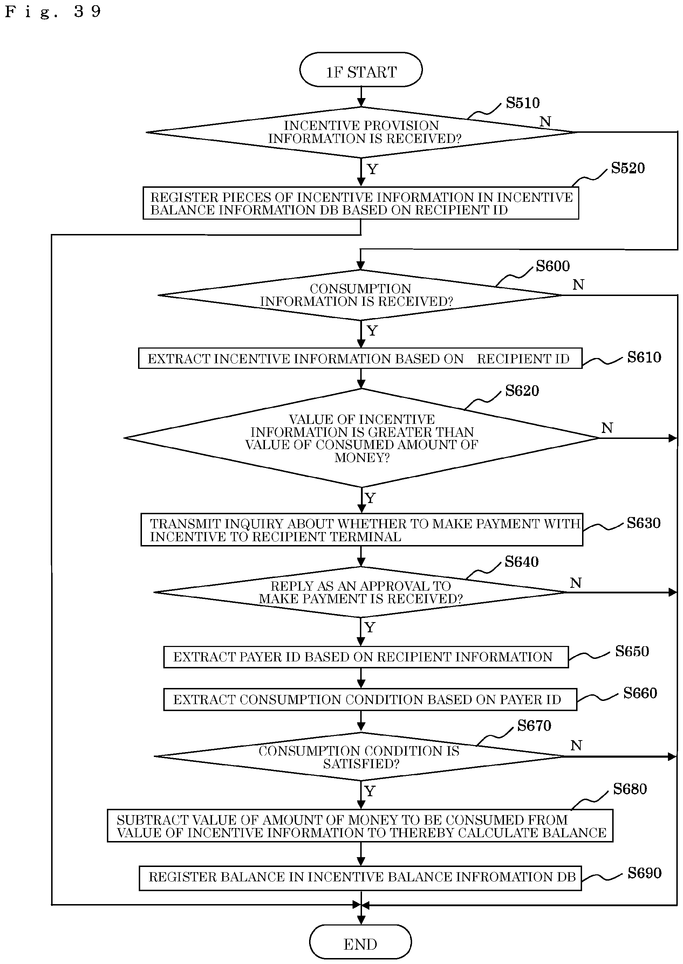

Next, an example of the operation of the incentive processing apparatus IF that implements the above-described sixth method will be described with reference to FIG.39.

First, the incentive information registration unit 111 performs a process of determining whether or not incentive payment information has been received (S510). The incentive payment information includes at least a recipient ID for identifying a recipient and incentive information indicating an incentive value to be paid for each recipient.

As a result, when the incentive information registration unit 111 receives the incentive payment information (Y), the incentive information registration unit 111 continues to register the incentive information in the incentive balance information DB 124 in association with the recipient ID (S520). At this time, if there is a balance in the incentive information registered in the incentive balance information DB 124, the incentive information included in the acquired incentive payment information may be registered instead of the balance of the incentive information. Alternatively, the incentive information included in the acquired incentive payment information may be added to the balance of the incentive information and registered.

Thereafter, a series of operations in the incentive processing device IF ends (end).

On the other hand, when the incentive information registration unit 111 determines that the incentive payment information has not been received (N), the incentive payment possibility determination unit 112 performs a process of determining whether the consumption information has been received (S600). This consumption information includes a recipient ID for specifying the recipient who has consumed information for specifying the amount of consumption, and a consumer ID for identifying the consumer who has consumed.

As a result, when the incentive payment possibility determination unit 112 determines that the consumption information has been received (Y), the incentive payment possibility determination unit 112 continues to refer to the incentive balance information DB 124. Then, the incentive payment possibility determination unit 112 performs a process of extracting registered incentive information based on the acquired recipient ID (S610).

On the other hand, when the incentive payment possibility determination unit 112 determines that consumption information has not been received (N), a series of operations in the incentive processing device IF ends.

Further, the incentive payment possibility determination unit 112 compares the extracted incentive information with the consumption amount information included in the acquired consumption information. Then, the incentive payment possibility determination unit 112 performs a process of determining whether the value of the incentive information is greater than the value of the consumption amount information (S620).

As a result, when the incentive payment possibility determination unit 112 determines that the value of the incentive information is greater than or equal to the value of the consumption amount information (Y), the incentive payment possibility determination unit 112 transmits an inquiry notification to the recipient terminal 2C (S630). This inquiry notification confirms whether to continue the payment process using the incentive.

On the other hand, when the incentive payment possibility determination unit 112 determines that the value of the incentive information is smaller than the value of the consumption amount information (N), a series of operations in the incentive processing device IF ends.

After transmitting the inquiry to the recipient terminal 2C, the incentive payment possibility determination unit 112 performs a process of determining whether an acknowledgment has been received from the recipient terminal 2C indicating that the payment process is to be continued (S640).

As a result, when the incentive payment possibility determination unit 112 receives an acknowledgment from the recipient terminal 2C that the payment processing is to be continued (Y), the incentive payment possibility determination unit 112 refers to the payer specification information DB 121 based on the recipient ID. Then, the incentive payment possibility determination unit 112 performs a process of extracting a payer ID that specifies a payer who provides the incentive registered in association with the payer (S650).

On the other hand, when the incentive payment possibility determination unit 112 receives a rejection response not to continue the payment process from the recipient terminal 2C (i.e., does not receive an acknowledgment response to continue the payment process) (N), a series of operations in the incentive processing device IF ends.

After extracting the payer ID, the incentive payment possibility determination unit 112 refers to the consumption condition information DB 122 based on the extracted payer ID. Then, the incentive payment possibility determination unit 112 performs a process of extracting a consumption condition determined for the incentive to be paid by the payer registered in association with the payer ID (S660).

Further, the incentive payment possibility determination unit 112 specifies the consumer who has consumed the product with reference to the consumer information DB 123 based on the received consumer ID. Then, the incentive payment possibility determination unit 112 performs a process of determining whether the identified consumer satisfies the extracted consumption condition (S670).

As a result, when the incentive payment possibility determination unit 112 determines that the consumption condition is satisfied (Y), the incentive payment processing unit 113 calculates the balance by subtracting the value of the consumption amount information from the value of the incentive information (S680).

On the other hand, when the incentive payment possibility determination unit 112 determines that the consumption condition is not satisfied (N), a series of operations in the incentive processing device IF ends.

Then, the incentive payment processing unit 113 performs a process of registering the calculated balance of the incentive information in the incentive balance information DB 124 (S690).

Thus, a series of operations in the incentive processing device IF ends.

As described above, according to the sixth incentive processing apparatus according to the present embodiment, when it is determined that the recipient's consumption satisfies the consumption condition, the payment is performed by subtracting the consumption amount from the incentive to be paid.

Thus, malicious managers and entrepreneurs can be prevented from misappropriating subsidies and loans, using bribes, and using them outside of their business.

Furthermore, the combination of digital money incentive payments based on blockchain technology and payment services can prevent unauthorized use of incentives such as subsidies, subsidies, and benefits for regional revitalization, etc.

### Reference Signs List

- NW: network
- 1A, 1B, 1C, 1D, 1E, 1F: incentive processing device
- 2: payment terminal
- 2A: store register
- 2B: worker terminal
- 2C: recipient terminal
- 3: personnel attendance salary calculation device
- 5: payer terminal
- 11: incentive information registration unit
- 12: incentive payment possibility determination unit
- 13: incentive payment processing unit
- 14: incentive information transmission unit
- 15: incentive payment notification unit
- 16: incentive balance notification unit
- 20: storage unit
- 21: company specification information database
- 22: consumption condition information database
- 23: consumption destination information database
- 24: incentive balance information database
- 25: incentive payment information database
- 50: screen
- 51: incentive display area
- 53: itemized incentive display area
- 53a: regional contribution allowance display area
- 53a1: first region display area
- 53a2: second region display area
- 53b: business partner support allowance display area
- 53b1: first business partner display area
- 53b2: second business partner display area
- 54: back button
- 55: checkbox
- 56: detail display area
- 111: incentive information registration unit
- 112: incentive payment possibility determination unit
- 113: incentive payment processing unit
- 120: storage unit
- 121: payer specification information database
- 122: consumption condition information database
- 123: consumption destination information database
- 124: incentive balance information database

## Claims

1. An incentive processing device for performing a process of making payment by using an incentive provided to a worker by a company when the worker makes consumption designated by the company, wherein
the incentive processing device is configured to be capable of communicating through a network with a payment terminal to be used by a worker to make payment for consumption and a personnel attendance salary calculation device that calculates salary of the worker based on attendance and leaving times of the worker and personnel labor information on the worker, and
the incentive processing device comprises at least:
company specification information storage means for storing, in association with each other, worker identification information identifying the worker and company identification information identifying the company that provides an incentive to the worker;
consumption condition information storage means for storing, in association with each other, the company identification information, a consumption conditions designated by the company for making payment with the incentive;
consumption destination information storage means for storing, in association with each other, consumption destination identification information identifying a consumption destination and consumption destination related information including a name and address of the consumption destination;
incentive balance information storage means for storing, in association with each other, the worker identification information and a balance of incentive information provided to the worker by the company;
incentive information registration means for obtaining, from the personnel attendance salary calculation device, incentive provision information containing at least the pieces of worker identification information identifying workers and the pieces of incentive information indicating values of the incentives provided to the workers, and registering the pieces of incentive information in association with the respective pieces of worker identification information in the incentive balance information storage means;
incentive payment possibility determination means for obtaining, from the payment terminal, consumption information containing the worker identification information identifying a worker who is making consumption, to-be-consumed money information identifying an amount of money to be paid by the worker for the consumption, and the consumption destination identification information identifying the consumption destination where the consumption is being made, referring to the company specification information storage means and, based on the obtained worker identification information, extracting the company identification information identifying the company providing salary to the worker, referring to the consumption condition information storage means and, based on the extracted company identification information, extracting the consumption conditions designated by the company for provision of the incentive, referring to the consumption destination information storage means and, based on the obtained consumption destination identification information, identifying the consumption destination where the consumption is being made, and then determining whether the identified consumption destination satisfies the extracted consumption conditions; and
incentive payment processing means for, if the incentive payment possibility determination means determines that the consumption conditions are satisfied, subtracting the to-be-consumed money information from the incentive information to thereby calculate a balance, and registering the balance in the incentive balance information storage means.

2. The incentive processing device according to claim 1, wherein the incentive processing device is configured to be capable of communicating further through the network with worker terminals utilized by the workers when the payment terminal is an device installed at a store where the workers make consumption,
after obtaining the consumption information but before extracting the company identification information based on the worker identification information contained in the obtained consumption information, the incentive payment possibility determination means refers to the incentive balance information storage means, extracts the incentive information registered based on the worker identification information contained in the obtained consumption information, and compares the extracted incentive information and the to-be-consumed money information contained in the obtained consumption information, if determining that a value of the incentive information is greater or equal, the incentive payment possibility determination means transmits an inquiry notification for checking whether to proceed with a payment process to the worker terminal, and if receiving an approval reply as an indication to proceed with the payment process from the worker terminal, the incentive payment possibility determination means extracts the company identification information and the consumption conditions, identifies the consumption destination, and determines whether the consumption conditions are satisfied.

3. The incentive processing device according to claim 1, wherein the incentive processing device is configured to be capable of communicating further through the network with worker terminals utilized by the workers when the payment terminal is an device installed at a store where the workers make consumption,
after obtaining the consumption information but before extracting the company identification information based on the worker identification information contained in the obtained consumption information, the incentive payment possibility determination means refers to the incentive balance information storage means, extracts the incentive information registered based on the worker identification information contained in the obtained consumption information, and compares the extracted incentive information and the to-be-consumed money information contained in the obtained consumption information, if determining that a value of the incentive information is smaller, the incentive payment possibility determination means transmits an inquiry notification for checking whether to proceed with a payment process by paying a balance due by other payment means than payment using the incentive to the worker terminal, if receiving an approval reply as an indication to proceed with the payment process from the worker terminal, the incentive payment possibility determination means extracts the company identification information and the consumption conditions, identifies the consumption destination, and determines whether the consumption conditions are satisfied, and
the incentive payment processing means defines a value of subtraction of the to-be-consumed money information from the incentive information as "0" and registers the "0" as a balance in the incentive balance information storage means.

4. The incentive processing device according to claim 1, wherein
the incentive processing device is configured to be capable of communicating further through the network with worker terminals utilized by the workers when the payment terminal is an device installed at a store where the workers make consumption,
after obtaining the consumption information but before extracting the company identification information based on the worker identification information contained in the obtained consumption information, the incentive payment possibility determination means refers to the incentive balance information storage means, extracts the incentive information registered based on the worker identification information contained in the obtained consumption information, and compares the extracted incentive information and the to-be-consumed money information contained in the obtained consumption information, if determining that a value of the incentive information is smaller, the incentive payment possibility determination means transmits, to the personnel attendance salary calculation device, a first inquiry notification containing the worker identification information and balance due information indicating a difference between the to-be-consumed money information and the incentive information, the first inquiry notification being for checking whether the balance due is payable by referring to an up-to-date salary scheduled to be provided to the worker, if receiving a payment possible reply indicating that the payment is possible from the personnel attendance salary calculation device, the incentive payment possibility determination means transmits a second inquiry notification for checking whether to proceed with a payment process by deducting the balance due from the salary scheduled to be provided to the worker terminal, if receiving an approval reply as an indication to proceed with the payment process from the worker terminal, the incentive payment possibility determination means extracts the company identification information and the consumption conditions, identifies the consumption destination, and determines whether the consumption conditions are satisfied, and
the incentive payment processing means subtracts the to-be-consumed money information from the incentive information to thereby calculate a value of the balance due and registers the value of the balance due as a balance in the incentive balance information storage means.

5. The incentive processing device according to any one of claims 1 to 4, wherein when obtaining the incentive provision information from the personnel attendance salary calculation device, the incentive information registration means registers the pieces of incentive information contained in the obtained incentive provision information in place of balances of pieces of incentive information registered in the incentive balance information storage means.

6. The incentive processing device according to any one of claims 1 to 4, wherein when obtaining the incentive provision information from the personnel attendance salary calculation device, the incentive information registration means adds the pieces of incentive information contained in the obtained incentive provision information to balances of pieces of incentive information registered in the incentive balance information storage means and registers sums.

7. The incentive processing device according to any one of claims 1 to 6, wherein the incentive processing device is configured to be capable of communicating further through the network with worker terminals utilized by the workers, and
the incentive processing device further comprises incentive information transmission means for, when obtaining worker identification information from any of the worker terminals, referring to the incentive balance information storage means, extracting the incentive information registered based on the worker identification information, and transmitting the extracted incentive information to the worker terminal.

8. The incentive processing device according to claim 7, wherein
the incentive information registration means obtains, for each worker, consumption destination region information and incentive information set for each consumption destination region as incentive provision information, and stores, for each worker, the consumption destination region information and the incentive information in association with each other in the incentive balance information storage means, and
the incentive information transmission means refers to the incentive balance information storage means, extracts the consumption destination region information and the incentive information registered based on the worker identification information, and transmits the extracted incentive information with the consumption destination region information associated therewith to the worker terminal.

9. The incentive processing device according to claim 7, wherein
the incentive information registration means obtains, for each worker, business partner store information and incentive information set for each business partner store as incentive provision information, and stores, for each worker, the business partner store information and the incentive information in association with each other in the incentive balance information storage means, and
the incentive information transmission means refers to the incentive balance information storage means, extracts the business partner store information and the incentive information registered based on the worker identification information, and transmits the extracted incentive information with the business partner store information associated therewith to the worker terminal.

10. The incentive processing device according to any one of claims 1 to 9, further comprising incentive payment notification means for, after the incentive payment processing means calculates the balance of the incentive information, transmitting a payment completion notification indicating that payment has been completed using the incentive to the payment terminal.

11. The incentive processing device according to any one of claims 1 to 10, further comprising incentive balance notification means for transmitting the balances of the pieces of incentive information on the respective workers stored in the incentive balance information storage means to the personnel attendance salary calculation device at predetermined time intervals.

12. The incentive processing device according to claim 11, further comprising:
incentive payment information storage means for storing, in association with each other, the pieces of worker identification information, the pieces of consumption destination identification information, and pieces of consumed money information on payments with incentives made with the incentive payment processing means; and
the incentive balance notification means transmits the pieces of consumed money information on respective consumption destinations stored in the incentive payment information storage means to the personnel attendance salary calculation device at predetermined time intervals.

13. (Amended) An incentive processing system for performing a process of making payment by using an incentive provided to a worker by a company when the worker makes consumption designated by the company, wherein
an incentive processing device that executes a process of paying an amount of money to be consumed by a worker with an incentive provided to the worker by a company, a payment terminal to be used by the worker to make payment for consumption, and a personnel attendance salary calculation device that calculates salary of the worker based on attendance and leaving times of the worker and personnel labor information on the worker are configured to be capable of communicating with each other through a network,
the personnel attendance salary calculation device comprises means for transmitting, to the incentive processing device, incentive provision information containing at least pieces of worker identification information identifying workers and pieces of incentive information indicating values of the incentives provided to the workers,
the payment terminal comprises means for transmitting, to the incentive processing device, consumption information containing the worker identification information identifying a worker who is making consumption, to-be-consumed money information identifying an amount of money to be paid by the worker for the consumption, and consumption destination identification information identifying a consumption destination where the consumption is being made, and
the incentive processing device comprises
company specification information storage means for storing, in association with each other, the worker identification information identifying a worker and company identification information identifying the company that provides an incentive to the worker,
consumption condition information storage means for storing, in association with each other, the company identification information, a consumption conditions designated by the company for making payment with the incentive,
consumption destination information storage means for storing, in association with each other, the consumption destination identification information identifying a consumption destination and consumption destination related information including a name and address of the consumption destination,
incentive balance information storage means for storing, in association with each other, the worker identification information and a balance of the incentive information provided to the worker by the company,
incentive information registration means for obtaining the incentive provision information from the personnel attendance salary calculation device, and registering the pieces of incentive information in association with the respective pieces of worker identification information in the incentive balance information storage means,
incentive payment possibility determination means for obtaining the consumption information from the payment terminal, referring to the company specification information storage means and, based on the obtained worker identification information, extracting the company identification information identifying the company providing salary to the worker, referring to the consumption condition information storage means and, based on the extracted company identification information, extracting the consumption conditions designated by the company for provision of the incentive, referring to the consumption destination information storage means and, based on the obtained consumption destination identification information, identifying the consumption destination where the consumption is being made, and then determining whether the identified consumption destination satisfies the extracted consumption conditions, and
incentive payment processing means for, if the incentive payment possibility determination means determines that the consumption conditions are satisfied, subtracting the to-be-consumed money information from the incentive information to thereby calculate a balance, and registering the balance in the incentive balance information storage means.

14. The incentive processing system according to claim 13, wherein
the incentive processing device is configured to be capable of communicating further through the network with worker terminals utilized by the workers when the payment terminal is an device installed at a store where the workers make consumption,
after obtaining the consumption information but before extracting the company identification information based on the worker identification information contained in the obtained consumption information, the incentive payment possibility determination means of the incentive processing device refers to the incentive balance information storage means, extracts the incentive information registered based on the worker identification information contained in the obtained consumption information, and compares the extracted incentive information and the to-be-consumed money information contained in the obtained consumption information, if determining that a value of the incentive information is greater or equal, the incentive payment possibility determination means transmits an inquiry notification for checking whether to proceed with a payment process to the worker terminal, if receiving an approval reply as an indication to proceed with the payment process from the worker terminal, the incentive payment possibility determination means extracts the company identification information and the consumption conditions, identifies the consumption destination, and determines whether the consumption conditions are satisfied, and
the worker terminal further comprises
means for receiving the inquiry notification for checking whether to proceed with the payment process from the incentive processing device, and
means for transmitting the approval reply as an indication to proceed with the payment process to the incentive processing device.

15. The incentive processing system according to claim 13, wherein
the incentive processing device is configured to be capable of communicating further through the network with worker terminals utilized by the workers when the payment terminal is an device installed at a store where the workers make consumption,
after obtaining the consumption information but before extracting the company identification information based on the worker identification information contained in the obtained consumption information, the incentive payment possibility determination means of the incentive processing device refers to the incentive balance information storage means, extracts the incentive information registered based on the worker identification information contained in the obtained consumption information, and compares the extracted incentive information and the to-be-consumed money information contained in the obtained consumption information, if determining that a value of the incentive information is smaller, the incentive payment possibility determination means transmits an inquiry notification for checking whether to proceed with a payment process by paying a balance due by other payment means than payment using the incentive to the worker terminal, if receiving an approval reply as an indication to proceed with the payment process from the worker terminal, the incentive payment possibility determination means extracts the company identification information and the consumption conditions, identifies the consumption destination, and determines whether the consumption conditions are satisfied,
the incentive payment processing means defines a value of subtraction of the to-be-consumed money information from the incentive information as "0" and registers the "0" as a balance in the incentive balance information storage means, and
the worker terminal further comprises
means for receiving the inquiry notification for checking whether to proceed with the payment process from the incentive processing device, and
means for transmitting the approval reply as an indication to proceed with the payment process to the incentive processing device.

16. The incentive processing system according to claim 13, wherein
the incentive processing device is configured to be capable of communicating further through the network with worker terminals utilized by the workers when the payment terminal is an device installed at a store where the workers make consumption,
after obtaining the consumption information but before extracting the company identification information based on the worker identification information contained in the obtained consumption information, the incentive payment possibility determination means of the incentive processing device refers to the incentive balance information storage means, extracts the incentive information registered based on the worker identification information contained in the obtained consumption information, and compares the extracted incentive information and the to-be-consumed money information contained in the obtained consumption information, if determining that a value of the incentive information is smaller, the incentive payment possibility determination means transmits, to the personnel attendance salary calculation device, a first inquiry notification containing the worker identification information and balance due information indicating a difference between the to-be-consumed money information and the incentive information, the first inquiry notification being for checking whether the balance due is payable by referring to an up-to-date salary scheduled to be provided to the worker, if receiving a payment possible reply indicating that the payment is possible from the personnel attendance salary calculation device, the incentive payment possibility determination means transmits a second inquiry notification for checking whether to proceed with a payment process by deducting the balance due from the salary scheduled to be provided to the worker terminal, if receiving an approval reply as an indication to proceed with the payment process from the worker terminal, the incentive payment possibility determination means extracts the company identification information and the consumption conditions, identifies the consumption destination, and determines whether the consumption conditions are satisfied,
the incentive payment processing means subtracts the to-be-consumed money information from the incentive information to thereby calculate a value of the balance due and registers the value of the balance due as a balance in the incentive balance information storage means,
the personnel attendance salary calculation device further comprises
means for receiving, from the incentive processing device, the first inquiry notification, which contains the worker identification information and the balance due information, for checking whether the balance due is payable by referring to the up-to-date salary scheduled to be provided to the worker, and
means for transmitting the payment possible reply, which indicates that the payment is possible, to the incentive processing device, and
the worker terminal further comprises
means for receiving the second inquiry notification for checking whether to proceed with the payment process from the incentive processing device, and
means for transmitting the approval reply as an indication to proceed with the payment process to the incentive processing device.

17. The incentive processing system according to any one of claims 13 to 16, wherein when obtaining the incentive provision information from the personnel attendance salary calculation device, the incentive information registration means of the incentive processing device registers the pieces of incentive information contained in the obtained incentive provision information in place of balances of pieces of incentive information registered in the incentive balance information storage means.

18. The incentive processing system according to any one of claims 13 to 16, wherein when obtaining the incentive provision information from the personnel attendance salary calculation device, the incentive information registration means of the incentive processing device adds the pieces of incentive information contained in the obtained incentive provision information to balances of pieces of incentive information registered in the incentive balance information storage means and registers sums.

19. The incentive processing system according to any one of claims 13 to 18, wherein the incentive processing device is configured to be capable of communicating through the network with worker terminals utilized by the workers,
the incentive processing device further comprises incentive information transmission means for, when obtaining worker identification information from any of the worker terminals, referring to the incentive balance information storage means, extracting the incentive information registered based on the worker identification information, and transmitting the extracted incentive information to the worker terminal, and
the worker terminal further comprises
means for receiving the incentive information from the incentive processing device, and
means for displaying the received incentive information.

20. The incentive processing system according to claim 19, wherein the incentive information registration means of the incentive processing device obtains, for each worker, consumption destination region information and incentive information set for each consumption destination region as incentive provision information, and stores, for each worker, the consumption destination region information and the incentive information in association with each other in the incentive balance information storage means, and
the incentive information transmission means refers to the incentive balance information storage means, extracts the consumption destination region information and the incentive information registered based on the worker identification information, and transmits the extracted incentive information with the consumption destination region information associated therewith to the worker terminal, and
the worker terminal further comprises
means for receiving the incentive information with the consumption destination region information associated therewith from the incentive processing device, and
means for displaying the received incentive information with the consumption destination region information associated therewith.

21. The incentive processing device according to claim 19, wherein the incentive information registration means of the incentive processing device obtains, for each worker, business partner store information and incentive information set for each business partner store as incentive provision information, and stores, for each worker, the business partner store information and the incentive information in association with each other in the incentive balance information storage means, and
the incentive information transmission means refers to the incentive balance information storage means, extracts the business partner store information and the incentive information registered based on the worker identification information, and transmits the extracted incentive information with the business partner store information associated therewith to the worker terminal, and
the worker terminal further comprises
means for receiving the incentive information with the business partner store information associated therewith from the incentive processing device, and
means for displaying the received incentive information with the business partner store information associated therewith.

22. The incentive processing system according to any one of claims 13 to 21, wherein the incentive processing device further comprises incentive payment notification means for, after the incentive payment processing means calculates the balance of the incentive information, transmitting a payment completion notification indicating that payment has been completed using the incentive to the payment terminal, and
the payment terminal further comprises
means for receiving the payment completion notification from the incentive processing device, and
means for displaying the received payment completion notification.

23. The incentive processing system according to any one of claims 13 to 22, wherein the incentive processing device further comprises incentive balance notification means for transmitting the balances of the pieces of incentive information on the respective workers stored in the incentive balance information storage means to the personnel attendance salary calculation device at predetermined time intervals, and
the personnel attendance salary calculation device further comprises means for receiving the balances of the pieces of incentive information from the incentive processing device.

24. The incentive processing system according to claim 23, wherein the incentive processing device further comprises incentive payment information storage means for storing, in association with each other, the pieces of worker identification information, the pieces of consumption destination identification information, and pieces of consumed money information on payments with incentives made with the incentive payment processing means,
the incentive balance notification means transmits the pieces of consumed money information on respective consumption destinations stored in the incentive payment information storage means to the personnel attendance salary calculation device at predetermined time intervals, and
the personnel attendance salary calculation device further comprises means for receiving the pieces of consumed money information on the respective consumption destinations from the incentive processing device.

25. An incentive processing method of performing a process of making payment by using an incentive provided to a worker by a company when the worker makes consumption designated by the company, wherein an incentive processing device which is configured to be capable of communicating through a network with a payment terminal to be used by a worker to make payment for consumption and a personnel attendance salary calculation device that calculates salary of the worker based on attendance and leaving times of the worker and personnel labor information on the worker, and which comprises company specification information storage means for storing, in association with each other, worker identification information identifying a worker and company identification information identifying the company that provides an incentive to the worker, consumption condition information storage means for storing, in association with each other, the company identification information, a consumption conditions designated by the company for making payment with the incentive, consumption destination information storage means for storing, in association with each other, consumption destination identification information identifying a consumption destination and consumption destination related information including a name and address of the consumption destination, and incentive balance information storage means for storing, in association with each other, the worker identification information and a balance of incentive information provided to the worker by the company, executes:
a process of obtaining, from the personnel attendance salary calculation device, incentive provision information containing at least the pieces of worker identification information identifying workers and the pieces of incentive information indicating values of the incentives provided to the workers, and registering the pieces of incentive information in association with the respective pieces of worker identification information in the incentive balance information storage means;
a process of obtaining, from the payment terminal, consumption information containing the worker identification information identifying a worker who is making consumption, to-be-consumed money information identifying an amount of money to be paid by the worker for the consumption, and the consumption destination identification information identifying the consumption destination where the consumption is being made, referring to the company specification information storage means and, based on the obtained worker identification information, extracting the company identification information identifying the company providing salary to the worker, referring to the consumption condition information storage means and, based on the extracted company identification information, extracting the consumption conditions designated by the company for provision of the incentive, referring to the consumption destination information storage means and, based on the obtained consumption destination identification information, identifying the consumption destination where the consumption is being made, and then determining whether the identified consumption destination satisfies the extracted consumption conditions; and
a process of, if determining that the consumption conditions are satisfied, subtracting the to-be-consumed money information from the incentive information to thereby calculate a balance, and registering the balance in the incentive balance information storage means.

26. The incentive processing method according to claim 25, wherein
the incentive processing device is configured to be capable of communicating further through the network with worker terminals utilized by the workers when the payment terminal is an device installed at a store where the workers make consumption, and after obtaining the consumption information from the payment terminal but before extracting the company identification information based on the worker identification information contained in the obtained consumption information, the incentive processing device executes a process of referring to the incentive balance information storage means, extracting the incentive information registered based on the worker identification information contained in the obtained consumption information, and comparing the extracted incentive information and the to-be-consumed money information contained in the obtained consumption information, if determining that a value of the incentive information is greater or equal, transmitting an inquiry notification for checking whether to proceed with a payment process to the worker terminal, and if receiving an approval reply as an indication to proceed with the payment process from the worker terminal, extracting the company identification information and the consumption conditions, identifying the consumption destination, and determining whether the consumption conditions are satisfied.

27. The incentive processing method according to claim 25, wherein
the incentive processing device is configured to be capable of communicating further through the network with worker terminals utilized by the workers when the payment terminal is an device installed at a store where the workers make consumption, and after obtaining the consumption information from the payment terminal but before extracting the company identification information based on the worker identification information contained in the obtained consumption information, the incentive processing device executes a process of referring to the incentive balance information storage means, extracting the incentive information registered based on the worker identification information contained in the obtained consumption information, and comparing the extracted incentive information and the to-be-consumed money information contained in the obtained consumption information, if determining that a value of the incentive information is smaller, transmitting an inquiry notification for checking whether to proceed with a payment process by paying a balance due by other payment means than payment using the incentive to the worker terminal, and if receiving an approval reply as an indication to proceed with the payment process from the worker terminal, extracting the company identification information and the consumption conditions, identifying the consumption destination, and determining whether the consumption conditions are satisfied, and
a process of defining a value of subtraction of the to-be-consumed money information from the incentive information as "0" and registering the "0" as a balance in the incentive balance information storage means if determining that the consumption conditions are satisfied.

28. The incentive processing method according to claim 25, wherein
the incentive processing device is configured to be capable of communicating further through the network with worker terminals utilized by the workers when the payment terminal is an device installed at a store where the workers make consumption, and after obtaining the consumption information from the payment terminal but before extracting the company identification information based on the worker identification information contained in the obtained consumption information, the incentive processing device executes a process of referring to the incentive balance information storage means, extracting the incentive information registered based on the worker identification information contained in the obtained consumption information, and comparing the extracted incentive information and the to-be-consumed money information contained in the obtained consumption information, if determining that a value of the incentive information is smaller, transmitting, to the personnel attendance salary calculation device, a first inquiry notification containing the worker identification information and balance due information indicating a difference between the to-be-consumed money information and the incentive information, the first inquiry notification being for checking whether the balance due is payable by referring to an up-to-date salary scheduled to be provided to the worker, if receiving a payment possible reply indicating that the payment is possible from the personnel attendance salary calculation device, transmitting a second inquiry notification for checking whether to proceed with a payment process by deducting the balance due from the salary scheduled to be provided to the worker terminal, and if receiving an approval reply as an indication to proceed with the payment process from the worker terminal, extracting the company identification information and the consumption conditions, identifying the consumption destination, and determining whether the consumption conditions are satisfied, and
a process of subtracting the to-be-consumed money information from the incentive information to thereby calculate a value of the balance due and registering the value of the balance due as a balance in the incentive balance information storage means if determining that the consumption conditions are satisfied.

29. The incentive processing method according to any one of claims 25 to 28, wherein the incentive processing device further executes a process of, when obtaining the incentive provision information from the personnel attendance salary calculation device, registering the pieces of incentive information contained in the obtained incentive provision information in place of balances of pieces of incentive information registered in the incentive balance information storage means.

30. The incentive processing method according to any one of claims 25 to 28, wherein the incentive processing device further executes a process of, when obtaining the incentive provision information from the personnel attendance salary calculation device, adding the pieces of incentive information contained in the obtained incentive provision information to balances of pieces of incentive information registered in the incentive balance information storage means and registering sums.

31. The incentive processing method according to any one of claims 25 to 30, wherein the incentive processing device is configured to be capable of communicating through the network with worker terminals utilized by the workers, and
the incentive processing device further executes a process of, when obtaining worker identification information from any of the worker terminals, referring to the incentive balance information storage means, extracting the incentive information registered based on the worker identification information, and transmitting the extracted incentive information to the worker terminal.

32. The incentive processing method according to claim 31, wherein the incentive processing device further executes:
a process of obtaining, for each worker, consumption destination region information and incentive information set for each consumption destination region as incentive provision information, and storing, for each worker, the consumption destination region information and the incentive information in association with each other in the incentive balance information storage means; and
a process of, when obtaining worker identification information from any of the worker terminals, referring to the incentive balance information storage means, extracting the consumption destination region information and the incentive information registered based on the worker identification information, and transmitting the extracted incentive information with the consumption destination region information associated therewith to the worker terminal.

33. The incentive processing method according to claim 31, wherein the incentive processing device further executes:
a process of obtaining, for each worker, business partner store information and incentive information set for each business partner store as incentive provision information, and storing, for each worker, the business partner store information and the incentive information in association with each other in the incentive balance information storage means; and
a process of, when obtaining worker identification information from any of the worker terminals, referring to the incentive balance information storage means, extracting the business partner store information and the incentive information registered based on the worker identification information, and transmitting the extracted incentive information with the business partner store information associated therewith to the worker terminal.

34. The incentive processing method according to any one of claims 25 to 33, wherein the incentive processing device further executes a process of, after calculating the balance of the incentive information, transmitting a payment completion notification indicating that payment has been completed using the incentive to the payment terminal.

35. The incentive processing method according to any one of claims 25 to 34, wherein the incentive processing device further executes a process of transmitting the balances of the pieces of incentive information on the respective workers stored in the incentive balance information storage means to the personnel attendance salary calculation device at predetermined time intervals.

36. The incentive processing method according to claim 35, wherein the incentive processing device further executes:
a process of storing, in association with each other, the pieces of worker identification information, the pieces of consumption destination identification information, and pieces of consumed money information on payments with incentives made; and
a process of transmitting the pieces of consumed money information on respective consumption destinations stored in the incentive payment information storage means to the personnel attendance salary calculation device at predetermined time intervals.

37. An incentive processing program that causes a computer to function as the incentive processing device according to any one of claims 1 to 12.
